# EUROPEAN PATENT APPLICATION

(11) **EP 4 790 527 A1**
(43) Date of publication of application: **12.08.2026**
(21) Application number: 26153857.3
(22) Date of filing: 23.01.2026
(51) Int. Cl.: G06F 3/041, G06F 3/044

(54) **DISPLAY DEVICE AND ELECTRONIC DEVICE**

(30) Priority: 05.02.2025 KR 20250014201
(71) Applicant: Samsung Display Co., Ltd., Yongin-si, Gyeonggi-do (KR)
(72) Inventor: Son, Jungha, Yongin-si, Gyeonggi-Do (KR); Kim, Junghak, Yongin-si, Gyeonggi-Do (KR); Ma, Yun A, Yongin-si, Gyeonggi-Do (KR); Yoo, Sangwook, Yongin-si, Gyeonggi-Do (KR); Lee, Jeongheon, Yongin-si, Gyeonggi-Do (KR)
(74) Representative: Gulde & Partner

(57) **Abstract**

A display device includes a display panel including a pixel, an input-sensing layer trace lines connected to sensing electrodes, a first sensor controller including first output channels electrically connected to first trace lines, a second sensor controller including second output channels electrically connected to second trace lines, and a compensation circuit connected to at least one of the first sensor controller or the second sensor controller, and including compensation capacitors respectively connected between the first or second output channels and at least one compensation voltage line configured to receive at least one compensation voltage, wherein at least one of the first sensor controller or the second sensor controller is configured to adjust a voltage level of the at least one compensation voltage when a target-sensing electrode among the sensing electrodes is connected with one output channel among the first output channels and the second output channels.

## Description

### BACKGROUND

Embodiments of the present disclosure described herein relate to a display device having substantially uniform sensing performance and an electronic device including the same.

Multimedia electronic devices, such as a television, a mobile phone, a tablet computer, a car navigation device, a game machine, and the like, include a display device for displaying an image. In addition, vehicles include a display device inside.

The display devices may include an input-sensing layer capable of providing a touch-based input method that enables a user to intuitively and conveniently input information or instructions in a suitable and simple manner, in addition to conventional input methods, such as a button, a keyboard, a mouse, and the like.

### SUMMARY

Embodiments of the present disclosure provide a display device having substantially uniform sensing performance in the entire area, and an electronic device including the same.

According to one or more embodiments, a display device includes a display panel including a pixel, an input-sensing layer above the display panel and including sensing electrodes, and trace lines connected to the sensing electrodes, a first sensor controller including first output channels electrically connected to first trace lines among the trace lines, a second sensor controller including second output channels electrically connected to second trace lines among the trace lines, and a compensation circuit connected to at least one of the first sensor controller or the second sensor controller, and including compensation capacitors respectively connected between one output channel among the first output channels and the second output channels and at least one compensation voltage line configured to receive at least one compensation voltage, wherein the at least one of the first sensor controller or the second sensor controller is configured to adjust a voltage level of the at least one compensation voltage when a target-sensing electrode among the sensing electrodes is connected with the one output channel among the first output channels and the second output channels.

The compensation capacitors may include a first compensation capacitor connected between a first compensation voltage line of the at least one compensation voltage line configured to receive a first compensation voltage of the at least one compensation voltage and the one output channel, and a second compensation capacitor connected between a second compensation voltage line of the at least one compensation voltage line configured to receive a second compensation voltage of the at least one compensation voltage, which is different from the first compensation voltage, and the one output channel.

A voltage level of at least one of the first compensation voltage or the second compensation voltage may be configured to be adjusted when the one output channel is connected with the target-sensing electrode.

An adjacent sensing electrode adjacent to the target-sensing electrode may be configured to receive a driving voltage, wherein a non-adjacent sensing electrode not adjacent to the target-sensing electrode is configured to receive a reference voltage.

The first compensation voltage may be configured to be varied to have a level difference from the driving voltage, wherein the second compensation voltage is configured to be varied to have a level difference from the reference voltage.

The display device may further include a first MUX circuit connected between the first trace lines and the first output channels, and a second MUX circuit connected between the second trace lines and the second output channels.

The input-sensing layer may include an active area where the sensing electrodes are located and an inactive area adjacent to the active area and where the first MUX circuit and the second MUX circuit are located.

The display device may further include a flexible film connected to the display panel, and a printed circuit board connected to the flexible film and below the first sensor controller and the second sensor controller.

The compensation capacitors may be above the printed circuit board and are connected to the at least one of the first sensor controller or the second sensor controller through the at least one compensation voltage line.

The input-sensing layer may include a first sensing area where first sensing electrodes among the sensing electrodes are located and a second sensing area where second sensing electrodes among the sensing electrodes are located, wherein the first sensor controller is electrically connected to the first sensing electrodes, and wherein the second sensor controller is electrically connected to the second sensing electrodes.

The compensation circuit may be electrically connected to a first boundary-sensing electrode, which is adjacent to a boundary between the first sensing area and the second sensing area, among the first sensing electrodes, and is electrically connected to a second boundary-sensing electrode, which is adjacent to the boundary, among the second sensing electrodes.

When the first boundary-sensing electrode is connected to a first boundary output channel among the first output channels, the first sensor controller may be configured to vary the voltage level of the at least one compensation voltage applied to at least one of the compensation capacitors connected to the first boundary output channel, wherein, when the second boundary-sensing electrode is connected to a second boundary output channel among the second output channels, the second sensor controller is configured to vary the voltage level of the at least one compensation voltage applied to at least one of the compensation capacitors connected to the second boundary output channel.

According to one or more embodiments, the compensation circuit connected to at least one of the first sensor controller or the second sensor controller may include a first compensation circuit connected between one output channel among the first output channels and the second output channels and a first compensation voltage line among the compensation voltage lines configured to receive a first compensation voltage among the compensation voltages, and a second compensation circuit connected between the one output channel and a second compensation voltage line among the compensation voltage lines configured to receive a second compensation voltage among the compensation voltage. A printed circuit board may be electrically connected to the display panel and to the input-sensing layer, and having the first sensor controller, the second sensor controller, and the compensation circuit thereon.

The first compensation voltage line and the second compensation voltage line may be respectively configured to receive the first compensation voltage and the second compensation voltage from one of the first sensor controller or the second sensor controller.

The display device may further include a first MUX circuit connected between the first trace lines and the first output channels, and a second MUX circuit connected between the second trace lines and the second output channels.

The input-sensing layer may include an active area where the sensing electrodes are located and an inactive area adjacent to the active area and where the first MUX circuit and the second MUX circuit are located.

The input-sensing layer may include a first sensing area where first sensing electrodes among the sensing electrodes are located and a second sensing area where second sensing electrodes among the sensing electrodes are located, wherein the first sensor controller is electrically connected to the first sensing electrodes, and wherein the second sensor controller is electrically connected to the second sensing electrodes.

The compensation circuit may be electrically connected to a first boundary-sensing electrode, which is adjacent to a boundary between the first sensing area and the second sensing area, among the first sensing electrodes, and is electrically connected to a second boundary-sensing electrode, which is adjacent to the boundary, among the second sensing electrodes.

The first sensor controller may be configured to vary the first compensation voltage and the second compensation voltage when the first boundary-sensing electrode is connected to a first boundary output channel among the first output channels, wherein the second sensor controller is configured to vary the first compensation voltage and the second compensation voltage when the second boundary-sensing electrode is connected to a second boundary output channel among the second output channels.

According to one or more embodiments, an electronic device includes a display module, and a processor configured to control operation of the display module, wherein the display module includes a display panel including a pixel, an input-sensing layer above the display panel and including sensing electrodes and trace lines connected to the sensing electrodes, a first sensor controller including first output channels electrically connected to first trace lines among the trace lines, a second sensor controller including second output channels electrically connected to second trace lines among the trace lines, and a compensation circuit connected to at least one of the first sensor controller or the second sensor controller and including compensation capacitors connected between a selected output channel selected from the first output channels and the second output channels and a compensation voltage line configured to receive a compensation voltage, and wherein the at least one of the first sensor controller or the second sensor controller is configured to adjust a voltage level of the compensation voltage when a target-sensing electrode among the sensing electrodes is connected with the selected output channel.

### BRIEF DESCRIPTION OF THE DRAWINGS

The above and other aspects of the present disclosure will become apparent by describing in detail embodiments thereof with reference to the accompanying drawings.
FIG. 1A is a view illustrating the interior of a vehicle in which a display device according to one or more embodiments of the present disclosure is located.
FIG. 1B is a perspective view of the display device illustrated in FIG. 1A.
FIG. 2A is a sectional view of a display device according to one or more embodiments of the present disclosure.
FIG. 2B is a sectional view of a display device according to one or more embodiments of the present disclosure.
FIG. 3A is an enlarged sectional view illustrating a portion of the display device illustrated in FIG. 2A.
FIG. 3B is an enlarged sectional view illustrating a portion of the display device illustrated in FIG. 2B.
FIG. 4 is an exploded perspective view of a display device according to one or more embodiments of the present disclosure.
FIG. 5 is a plan view of a display panel according to one or more embodiments of the present disclosure.
FIG. 6 is a plan view of an input-sensing layer according to one or more embodiments of the present disclosure.
FIG. 7 is a circuit diagram illustrating a compensation circuit according to one or more embodiments of the present disclosure.
FIG. 8 is a waveform diagram illustrating voltages applied to a first boundary-sensing electrode and a second boundary-sensing electrode among sensing electrodes illustrated in FIG. 6.
FIGS. 9A and 9B are circuit diagrams illustrating states of the first boundary-sensing electrode illustrated in FIG. 8 in a charging period and a discharging period.
FIGS. 10A and 10B are circuit diagrams illustrating states of the second boundary-sensing electrode illustrated in FIG. 8 in the charging period and the discharging period.
FIG. 11A is a block diagram illustrating a first MUX circuit, a second MUX circuit, first sensing electrodes, and second sensing electrodes according to one or more embodiments of the present disclosure.
FIG. 11B is a view illustrating a sensing sequence of a k^{th} sensing electrode column and a (k+1)^{th} sensing electrode column illustrated in FIG. 11A.
FIG. 12 is a block diagram for explaining the configuration and operation of the first MUX circuit illustrated in FIG. 11A.
FIG. 13 is a block diagram of an electronic device according to one or more embodiments.
FIG. 14 illustrates schematic views of electronic devices according to various embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, if a first part is described as being arranged "on" a second part, this indicates that the first part is arranged at an upper side or a lower side of the second part without the limitation to the upper side thereof on the basis of the gravity direction.

Further, the phrase "in a plan view" means an object portion is viewed from above, and the phrase "in a schematic cross-sectional view" means a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that if an element, layer, region, or component (e.g., an apparatus, a device, a circuit, a wire, an electrode, a terminal, a conductive film, etc.) is referred to as being "formed on," "on," "connected to," or "(operatively, functionally, or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, if a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a transistor, a resistor, an inductor, a capacitor, a diode and/or the like. Accordingly, a connection is not limited to the connections illustrated in the drawings or the detailed description and may also include other types of connections. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, if a portion of a layer, a film, an area, a plate, or the like is formed on another portion, a forming direction is not limited to an upper direction but includes forming the portion on a side surface or in a lower direction. On the contrary, if a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that if an element or layer is referred to as being "between" two elements or layers, it can be the only element or layer between the two elements or layers, or one or more intervening elements or layers may also be present.

For the purposes of this disclosure, expressions, such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XY, YZ, and XZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions, such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are only used to distinguish one element, member, component, region, area, layer, section, or portion from another element, member, component, region, area, layer, section, or portion. Thus, a first element, component, region, layer, or section described below could be termed a second element, component, region, layer, or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. The terms or words used in the present specification and claims are not to be limitedly interpreted as general or dictionary meanings and should be interpreted as meanings and concepts that are consistent with aspects of the present disclosure on the basis that an inventor can be their own lexicographer to appropriately define concepts of terms to describe the embodiments in the best way.

As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure." Furthermore, the expression "being the same" may mean "being substantially the same." In other words, the expression "being the same" may include a range that can be tolerated by those of ordinary skill in the art. The other expressions may also be expressions from which "substantially" has been omitted.

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

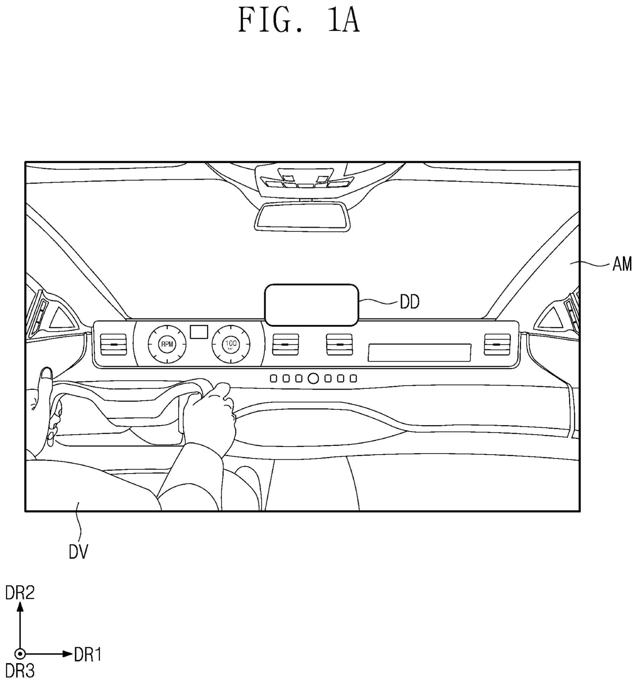

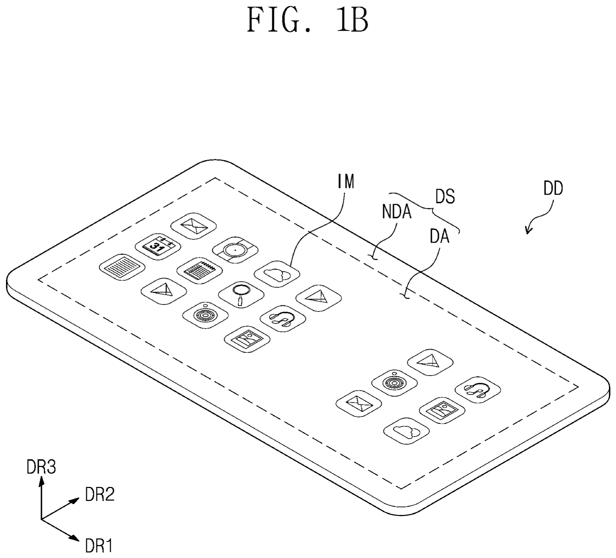

FIG. 1A is a view illustrating the interior of a vehicle in which a display device according to one or more embodiments of the present disclosure is located. FIG. 1B is a perspective view of the display device illustrated in FIG. 1A.

Referring to FIG. 1A, the display device DD is located inside the vehicle AM. The display device DD located inside the vehicle AM may provide various pieces of information to a driver DV (e.g., to a user). The display device DD may provide weather, speed, a map, or an image, such as a movie to the driver DV. The display device DD may be a touch-based display device capable of operating in response to a touch input of the driver DV.

Referring to FIGS. 1A and 1B, the display device DD has a plane defined by a first direction DR1 and a second direction DR2 crossing each other. The display device DD may have long sides extending in the first direction DR1, and short sides extending in the second direction DR2. The corners of the display device DD that connect the long sides and the short sides may have a curved shape.

Hereinafter, a direction substantially perpendicular to the plane defined by the first direction DR1 and the second direction DR2 is defined as a third direction DR3. In addition, the expression "when viewed from above the plane" used herein may mean that it is viewed in the third direction DR3.

The front surface of the display device DD may be defined as a display surface DS and may have the plane defined by the first direction DR1 and the second direction DR2. Images IM generated by the display device DD may be provided to the user through the display surface DS.

The display surface DS may include a display area DA and a non-display area NDA around the display area DA. The display area DA may display an image, and the non-display area NDA may not display an image. The non-display area NDA may define the border of the display device DD that surrounds the display area DA, and that is printed in a certain color.

Although the display device DD for the vehicle AM is illustrated as an example, embodiments of the present disclosure are not limited thereto. For example, the display device DD according to one or more embodiments of the present disclosure may be used in electronic devices, such as a smart phone, a digital camera, a notebook computer, a monitor, and a smart television, which provide an image to the user.

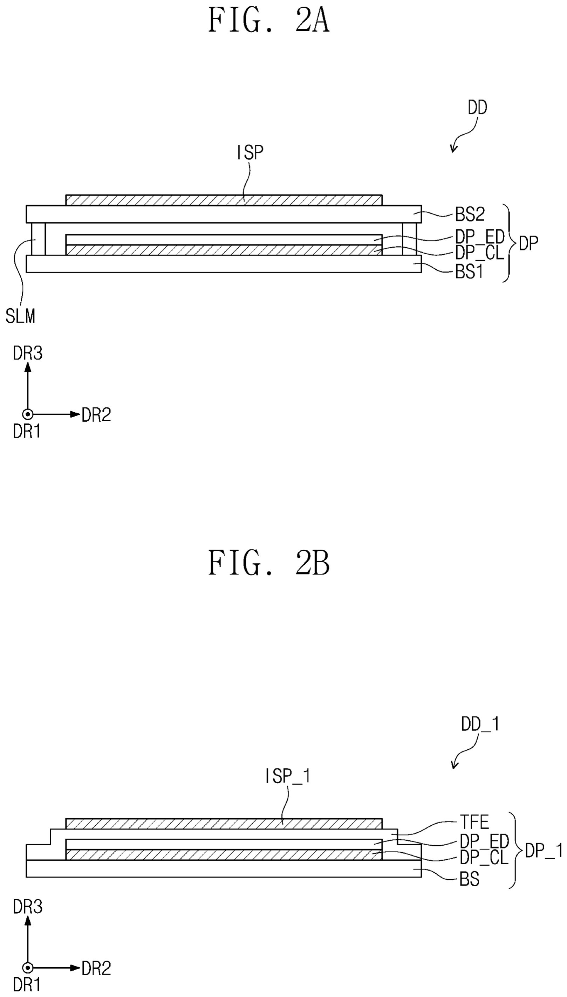

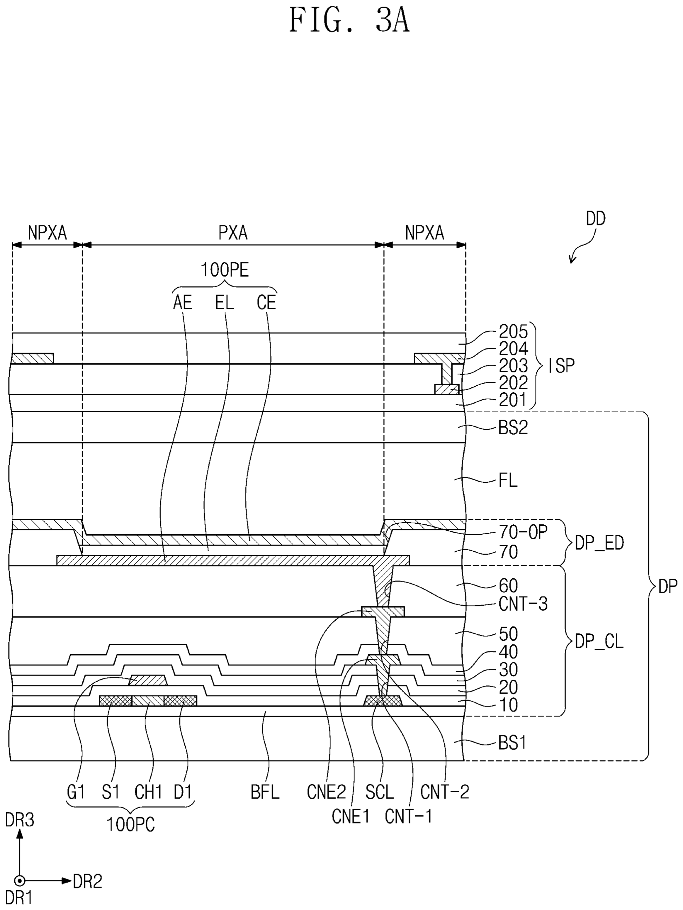

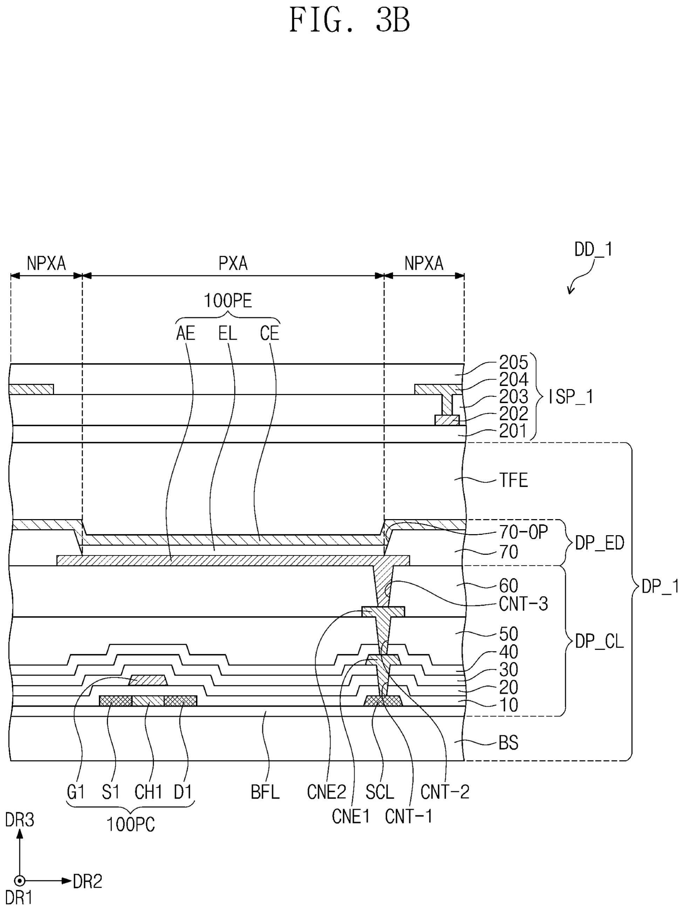

FIG. 2A is a sectional view of a display device according to one or more embodiments of the present disclosure, and FIG. 2B is a sectional view of a display device according to one or more embodiments of the present disclosure. FIG. 3A is an enlarged sectional view illustrating a portion of the display device illustrated in FIG. 2A, and FIG. 3B is an enlarged sectional view illustrating a portion of the display device illustrated in FIG. 2B.

Referring to FIG. 2A, the display device DD includes a display panel DP and an input-sensing layer ISP. The input-sensing layer ISP may be referred to as an input-sensing panel.

The display panel DP includes a first base layer BS1, a display circuit layer DP_CL, a display element layer DP_ED, a second base layer BS2, and a coupling member SLM. The input-sensing layer ISP may be located on the second base layer BS2.

Each of the first base layer BS1 and the second base layer BS2 may be a silicon substrate, a plastic substrate, a glass substrate, an insulating film, or a stack structure including a plurality of insulating layers.

The display circuit layer DP_CL may be located on the first base layer BS1. The display circuit layer DP_CL may include a plurality of insulating layers, a plurality of conductive layers, and a semiconductor layer. The plurality of conductive layers of the display circuit layer DP_CL may constitute signal lines or a pixel control circuit.

The display element layer DP_ED may be located on the display circuit layer DP_CL. The display element layer DP_ED may include light-emitting elements. For example, the display element layer DP_ED may include organic light-emitting diodes, inorganic light-emitting diodes, quantum dots, quantum rods, micro-LEDs, or nano-LEDs.

The second base layer BS2 may be located over the display element layer DP_ED. A certain space may be defined between the second base layer BS2 and the display element layer DP_ED. The space may be filled with air or an inert gas. Furthermore, in one or more embodiments of the present disclosure, the space may be filled with a filling layer FL (refer to FIG. 3A), such as a silicon-based polymer, an epoxy resin, or an acrylic resin.

The coupling member SLM may be located between the first base layer BS1 and the second base layer BS2. The coupling member SLM may couple the first base layer BS1 and the second base layer BS2. The coupling member SLM may include an organic material, such as a photocurable resin or a photoplastic resin or may include an inorganic material, such as a frit seal. However, the coupling member SLM is not limited to any one embodiment.

The input-sensing layer ISP may include a plurality of insulating layers and a plurality of conductive layers. The plurality of conductive layers may constitute sensing electrodes that sense an external input, sensing lines electrically connected with the sensing electrodes, and sensing pads electrically connected with the sensing lines.

Referring to FIG. 2B, the display device DD_1 includes a display panel DP_1 and an input-sensing layer ISP_1.

The display panel DP_1 includes a base layer BS, a display circuit layer DP_CL, a display element layer DP_ED, and an encapsulation layer TFE. The base layer BS may be of a flexible type. The input-sensing layer ISP_1 may be located on the encapsulation layer TFE. According to one or more embodiments of the present disclosure, the display panel DP_1 and the input-sensing layer ISP_1 may be formed through a continuous process. That is, the input-sensing layer ISP_1 may be directly formed on the encapsulation layer TFE.

Referring to FIGS. 2A and 3A, in the display panel DP, at least one inorganic layer may be formed on the upper surface of the first base layer BS1. The inorganic layer may include at least one of aluminum oxide, titanium oxide, silicon oxide, silicon oxy nitride, silicon nitride, zirconium oxide, or hafnium oxide. The inorganic layer may be formed of multiple layers. The multiple inorganic layers may constitute a barrier layer and/or a buffer layer. The display panel DP is illustrated as including a buffer layer BFL.

The buffer layer BFL may improve the coupling force between the first base layer BS1 and a semiconductor pattern. The buffer layer BFL may include silicon oxide layers and silicon nitride layers, and the silicon oxide layers and the silicon nitride layers may be alternately stacked one above another.

The semiconductor pattern may be located on the buffer layer BFL (as used herein, "located on" may mean "above"). The semiconductor pattern may include poly silicon. However, without being limited thereto, the semiconductor pattern may include amorphous silicon, low-temperature polycrystalline silicon, or an oxide semiconductor.

FIG. 3A illustrates only a portion of the semiconductor pattern, and the semiconductor pattern may be additionally located in other areas. The semiconductor pattern may be arranged across pixels according to a corresponding rule. The semiconductor pattern may have different electrical properties depending on whether doping is performed or not. The semiconductor pattern may include first areas having a high conductivity and a second area having a low conductivity. The first areas may be doped with an N-type dopant or a P-type dopant. A P-type transistor may include a doped area doped with a P-type dopant, and an N-type transistor may include a doped area doped with an N-type dopant. The second area may be an undoped area or may be an area more lightly doped than the first areas.

The first areas may have a higher conductivity than the second area and may substantially serve as an electrode or a signal line. The second area may substantially correspond to a channel area of a transistor. In other words, one portion of the semiconductor pattern may be the channel of the transistor, another portion may be a source or drain of the transistor, and the other portion may be a connecting electrode or a connecting signal line.

Each of the pixels may have an equivalent circuit including a plurality of transistors, at least one capacitor, and a light-emitting element, and the equivalent circuit of the pixel may be modified in various forms. In FIG. 3A, one transistor 100PC and one light-emitting element 100PE that are included in the pixel are illustrated as an example.

The transistor 100PC includes a source S1, a channel CH1, a drain D1, and a gate G1. The source S1, the channel CH1, and the drain D1 may be formed from the semiconductor pattern. The source S1 and the drain D1 may extend from the channel CH1 in opposite directions on the cross-section. In FIG. 3A, a portion of a connecting signal line SCL formed from the semiconductor pattern is illustrated. In one or more embodiments, the connecting signal line SCL may be electrically connected to the drain D1 of the transistor 100PC when viewed from above the plane.

A first insulating layer 10 may be located on the buffer layer BFL. The first insulating layer 10 may commonly overlap the plurality of pixels, and may cover the semiconductor pattern. The first insulating layer 10 may be an inorganic layer and/or an organic layer and may have a single-layer structure or a multi-layer structure. The first insulating layer 10 may include at least one of aluminum oxide, titanium oxide, silicon oxide, silicon nitride, silicon oxy nitride, zirconium oxide, or hafnium oxide. The first insulating layer 10 may be a single silicon oxide layer. Not only the first insulating layer 10 but also insulating layers of the display circuit layer DP_CL to be described below may be inorganic layers and/or organic layers and may have a single-layer structure or a multi-layer structure. The inorganic layers may include at least one of the aforementioned materials, but are not limited thereto.

The gate G1 is located on the first insulating layer 10. The gate G1 may be a portion of a metal pattern. The gate G1 overlaps the channel CH1. The gate G1 may function as a mask in a process of doping the semiconductor pattern.

A second insulating layer 20 may be located on the first insulating layer 10 and may cover the gate G1. The second insulating layer 20 may commonly overlap the pixels. The second insulating layer 20 may be an inorganic layer and/or an organic layer and may have a single-layer structure or a multi-layer structure. The second insulating layer 20 may include at least one of silicon oxide, silicon nitride, or silicon oxy nitride. The second insulating layer 20 may have a multi-layer structure including a silicon oxide layer and a silicon nitride layer.

A third insulating layer 30 may be located on the second insulating layer 20. The third insulating layer 30 may have a single-layer structure or a multi-layer structure. For example, the third insulating layer 30 may have a multi-layer structure including a silicon oxide layer and a silicon nitride layer.

A first connecting electrode CNE1 may be located on the third insulating layer 30. The first connecting electrode CNE1 may be connected to the connecting signal line SCL through a contact hole CNT-1 that penetrates the first insulating layer 10, the second insulating layer 20, and the third insulating layer 30.

A fourth insulating layer 40 may be located on the third insulating layer 30. The fourth insulating layer 40 may be a single silicon oxide layer. A fifth insulating layer 50 may be located on the fourth insulating layer 40. The fifth insulating layer 50 may be an organic layer.

A second connecting electrode CNE2 may be located on the fifth insulating layer 50. The second connecting electrode CNE2 may be connected to the first connecting electrode CNE1 through a contact hole CNT-2 that penetrates the fourth insulating layer 40 and the fifth insulating layer 50.

A sixth insulating layer 60 may be located on the fifth insulating layer 50 and may cover the second connecting electrode CNE2. The sixth insulating layer 60 may be an organic layer.

The display element layer DP_ED may be located on the display circuit layer DP_CL. The display element layer DP_ED may include the light-emitting element 100PE and a pixel-defining layer 70. For example, the display element layer DP_ED may include an organic luminescent material, an inorganic luminescent material, a quantum dot, a quantum rod, a micro-LED, or a nano-LED. Hereinafter, it will be exemplified that the light-emitting element 100PE is an organic light-emitting element. However, the present disclosure is not particularly limited thereto.

The light-emitting element 100PE includes a first electrode AE, an emissive layer EL, and a second electrode CE. The first electrode AE may be located on the sixth insulating layer 60. The first electrode AE may be connected to the second connecting electrode CNE2 through a contact hole CNT-3 that penetrates the sixth insulating layer 60.

The pixel-defining layer 70 may be located on the sixth insulating layer 60 and may cover a portion of the first electrode AE. The pixel-defining layer 70 has an opening 70-OP defined therein. The opening 70-OP of the pixel-defining layer 70 exposes at least a portion of the first electrode AE.

The display area DA (refer to FIG. 1B) includes an emissive area PXA, and a non-emissive area NPXA adjacent to the emissive area PXA. The non-emissive area NPXA may surround the emissive area PXA. The emissive area PXA is defined to correspond to a partial area of the first electrode AE exposed through the opening 70-OP.

The emissive layer EL may be located on the first electrode AE. The emissive layer EL may be located in an area corresponding to the opening 70-OP. That is, the emissive layer EL may be separately formed in each of the pixels. When the emissive layer EL is separately formed in each of the pixels, each of the emissive layers EL may emit at least one of blue light, red light, or green light. However, without being limited thereto, the emissive layer EL may be connected to the pixels and may be provided in common. In this case, the emissive layer EL may provide blue light or white light.

The second electrode CE may be located on the emissive layer EL. The second electrode CE may have a one-body shape, and may be commonly located in the plurality of pixels.

In one or more embodiments, a hole control layer may be located between the first electrode AE and the emissive layer EL. The hole control layer may be commonly located in the emissive area PXA and the non-emissive area NPXA. The hole control layer may include a hole transport layer, and may further include a hole injection layer. An electron control layer may be located between the emissive layer EL and the second electrode CE. The electron control layer may include an electron transport layer, and may further include an electron injection layer. The hole control layer and the electron control layer may be commonly formed in the plurality of pixels using an open mask.

The second base layer BS2 may be located over the display element layer DP_ED. In one or more embodiments of the present disclosure, the first base layer BS1 and the second base layer BS2 may be of a rigid type.

The filling layer FL may be located between the first base layer BS1 and the second base layer BS2. The filling layer FL may be located in the space between the first base layer BS1 and the second base layer BS2 that is sealed by the coupling member SLM (refer to FIG. 2A). The filling layer FL may include a thermosetting material.

The input-sensing layer ISP may be directly located on the display panel DP. For example, the input-sensing layer ISP may be directly located on the second base layer BS2.

Referring to FIGS. 2B and 3B, the encapsulation layer TFE may be located on the display element layer DP_ED. The encapsulation layer TFE may include an inorganic layer, an organic layer, and an inorganic layer sequentially stacked one above another. However, layers constituting the encapsulation layer TFE are not limited thereto.

The inorganic layers may protect the display element layer DP_ED from moisture and oxygen, and the organic layer may protect the display element layer DP_ED from foreign matter, such as dust particles. The inorganic layers may include a silicon nitride layer, a silicon oxy nitride layer, a silicon oxide layer, a titanium oxide layer, or an aluminum oxide layer. The organic layer may include an acrylic organic layer, but is not limited thereto.

The input-sensing layer ISP_1 may be formed on the display panel DP_1 through a continuous process. In this case, the input-sensing layer ISP_1 may be expressed as being directly located on the display panel DP_1 (e.g., the encapsulation layer TFE). When the input-sensing layer ISP_1 is directly located on the display panel DP_1, this may mean that a third component is not located between the input-sensing layer ISP_1 and the display panel DP_1. That is, a separate adhesive member or coupling member may not be located between, or may be omitted from between, the input-sensing layer ISP_1 and the display panel DP_1. Alternatively, the input-sensing layer ISP_1 may be coupled to the display panel DP_1 through an adhesive member or a coupling member. The adhesive member may include a conventional adhesive or sticky substance.

Referring to FIGS. 3A and 3B, each of the input-sensing layers ISP and ISP_1 may include a base insulating layer 201, a first conductive layer 202, an intermediate insulating layer 203, a second conductive layer 204, and a cover insulating layer 205.

The base insulating layer 201 may be an inorganic layer including at least one of silicon nitride, silicon oxy nitride, or silicon oxide. Alternatively, the base insulating layer 201 may be an organic layer including an epoxy resin, an acrylic resin, or an imide-based resin. The base insulating layer 201 may have a single-layer structure or may have a multi-layer structure stacked in the third direction DR3.

Each of the first conductive layer 202 and the second conductive layer 204 may have a single-layer structure, or may have a multi-layer structure stacked in the third direction DR3.

A conductive layer having a single-layer structure may include a metal layer or a transparent conductive layer. The metal layer may include molybdenum, silver, titanium, copper, aluminum, or an alloy thereof. The transparent conductive layer may include transparent conductive oxide, such as indium tin oxide (ITO), indium zinc oxide (IZO), zinc oxide (ZnO), or indium zinc tin oxide (IZTO). In addition, the transparent conductive layer may include a conductive polymer, such as PEDOT, a metal nano-wire, or graphene.

A conductive layer having a multi-layer structure may include metal layers. The meal layers may have, for example, a three-layer structure of titanium/aluminum/titanium. The conductive layer having the multi-layer structure may include at least one metal layer and at least one transparent conductive layer.

At least one of the intermediate insulating layer 203 or the cover insulating layer 205 may include an inorganic film. The inorganic film may include at least one of aluminum oxide, titanium oxide, silicon oxide, silicon nitride, silicon oxy nitride, zirconium oxide, or hafnium oxide.

At least one of the intermediate insulating layer 203 or the cover insulating layer 205 may include an organic film. The organic film may include at least one of an acrylic resin, a methacrylic resin, a polyisoprene resin, a vinyl resin, an epoxy resin, a urethane-based resin, a cellulosic resin, a siloxane-based resin, a polyimide resin, a polyamide resin, or a perylene-based resin.

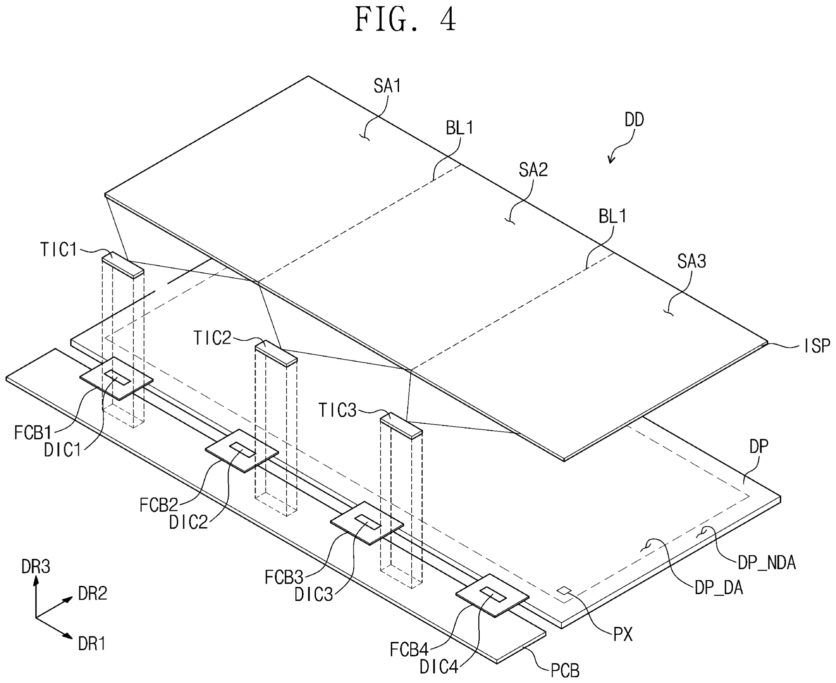

FIG. 4 is an exploded perspective view of a display device according to one or more embodiments of the present disclosure.

Referring to FIG. 4, the display device DD includes the display panel DP and the input-sensing layer ISP.

The display panel DP may be a component that substantially generates an image. The display panel DP may be an emissive display panel. For example, the display panel DP may be an organic light-emitting display panel, a quantum-dot display panel, a micro-LED display panel, or a nano-LED display panel.

The display panel DP includes a display area DP_DA that displays the image IM (refer to FIG. 1B), and a non-display area DP_NDA adjacent to the periphery of the display area DP_DA. The display area DP_DA may be an area corresponding to the display area DA illustrated in FIG. 1B, and the non-display area DP_NDA may be an area corresponding to the non-display area NDA illustrated in FIG. 1B. The display area DP_DA is an area where an image is substantially displayed, and the non-display area DP_NDA is a bezel area where an image is not displayed. Although FIG. 4 illustrates the structure in which the non-display area DP_NDA is located to surround the display area DP_DA, the present disclosure is not limited thereto. The non-display area DP_NDA may be located only on at least one side of the display area DP_DA.

The display panel DP includes a plurality of pixels PX and signal lines connected to the plurality of pixels PX. Each of the plurality of pixels PX may include a light-emitting element. The signal lines may include data lines, scan lines, emission control lines, and power lines.

The input-sensing layer ISP may be located on the display panel DP. The input-sensing layer ISP may sense an input applied from the outside. In one or more embodiments of the present disclosure, the input-sensing layer ISP may be located to overlap the display area DP_DA. The input-sensing layer ISP may include a plurality of areas. Although FIG. 4 illustrates an example that the input-sensing layer ISP is divided into three areas by virtual boundary lines BL1 and BL2, the number of areas provided for the input-sensing layer ISP is not limited thereto. Hereinafter, the three areas are referred to as the first sensing area SA1, the second sensing area SA2, and the third sensing area SA3, respectively. The first to third sensing areas SA1, SA2, and SA3 may be adjacent to one another in the first direction DR1.

The display device DD may further include a plurality of data driver ICs DIC1 to DIC4, a plurality of flexible films FCB1 to FCB4, and a printed circuit board PCB. The plurality of flexible films FCB1 to FCB4 may be provided between the display panel DP and the printed circuit board PCB and may electrically connect the display panel DP and the printed circuit board PCB. Each of the flexible films FCB1 to FCB4 includes one end portion coupled to the display panel DP and an opposite end portion coupled to the printed circuit board PCB.

Although FIG. 4 illustrates the structure in which the data driver ICs DIC1 to DIC4 are mounted on the flexible films FCB1 to FCB4, respectively, the present disclosure is not limited thereto. That is, the data driver ICs DIC1 to DIC4 may be directly mounted on the display panel DP in a chip-on-glass (COG) method.

Various circuits for generating various control signals and power signals required to drive the display panel DP and the data driver ICs DIC1 to DIC4 may be provided on the printed circuit board PCB. In one or more embodiments of the present disclosure, a driving controller may be mounted on the printed circuit board PCB and may control overall operation of the display device DD.

The display device DD may further include a first sensor controller TIC1, a second sensor controller TIC2, and a third sensor controller TIC3 for controlling operation of the input-sensing layer ISP. Although the three sensor controllers TIC1, TIC2, and TIC3 are illustrated as an example, the present disclosure is not limited thereto. The number of sensor controllers TIC1, TIC2, and TIC3 may be increased or decreased depending on the size of the input-sensing layer ISP.

The first sensor controller TIC1 may control operation of the first sensing area SA1 of the input-sensing layer ISP, the second sensor controller TIC2 may control operation of the second sensing area SA2 of the input-sensing layer ISP, and the third sensor controller TIC3 may control operation of the third sensing area SA3 of the input-sensing layer ISP. Each of the first to third sensor controllers TIC1, TIC2, and TIC3 may be configured in the form of a chip, and may be mounted on the printed circuit board PCB. A touch flexible circuit film may be located between the printed circuit board PCB and the input-sensing layer ISP. Accordingly, the input-sensing layer ISP may be electrically connected with the first to third sensor controllers TIC1, TIC2, and TIC3 on the printed circuit board PCB through the touch flexible circuit film.

The first to third sensor controllers TIC1, TIC2, and TIC3 may output sensing signals to the input-sensing layer ISP during a charging period, and may receive reception signals from the input-sensing layer ISP during a discharging period. The first to third sensor controllers TIC1, TIC2, and TIC3 may calculate coordinate information of an input, based on the difference between the sensing signals and the reception signals. The display device DD may execute an operation corresponding to the input, based on the coordinate signal.

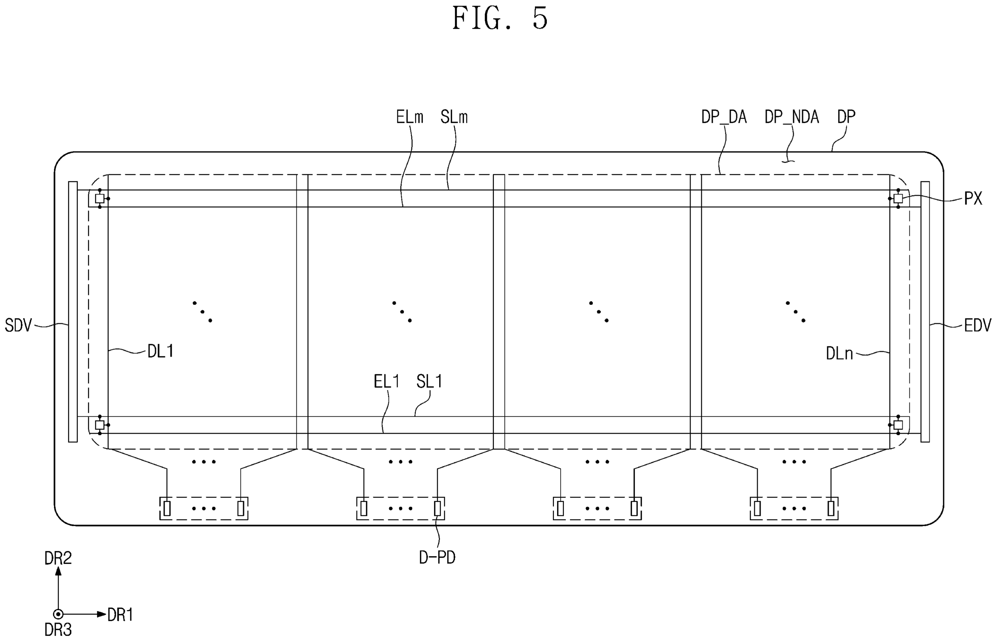

FIG. 5 is a plan view of the display panel according to one or more embodiments of the present disclosure.

Referring to FIG. 5, the display device DD includes the display panel DP, a scan driver circuit SDV, an emission driver circuit EDV, and a plurality of pad parts D-PD.

The display panel DP may have long sides extending in the first direction DR1, and short sides extending in the second direction DR2. The corners of the display panel DP that connect the long sides and the short sides may have an outwardly convex curved shape.

The display panel DP may include the display area DP_DA, and the non-display area DP_NDA surrounding the display area DP_DA (e.g., surrounding in plan view). The display area DP_DA may have a shape corresponding to the periphery of the display panel DP. Accordingly, the display area DP_DA may have long sides extending in the first direction DR1 and short sides extending in the second direction DR2, and the corners of the display area DP_DA that connect the long sides and the short sides may have an outwardly convex curved shape.

The display panel DP may include the plurality of pixels PX, a plurality of scan lines SL1 to SLm, a plurality of data lines DL1 to DLn, and a plurality of emission control lines EL1 to ELm, "m" and "n" being natural numbers greater than 1.

The pixels PX may be located in the display area DP_DA. The scan driver circuit SDV and the emission driver circuit EDV may be located in the non-display areas DP_NDA adjacent to opposite respective sides of the display panel DP that face away from each other in the first direction DR1. The plurality of pad parts D-PD may be located in the non-display area DP_NDA adjacent to one of opposite sides of the display panel DP that face away from each other in the second direction DR2. The plurality of pad parts D-PD may be adjacent to the lower end of the display panel DP when viewed from above the plane.

The scan lines SL1 to SLm may extend in the first direction DR1 and may be connected to the pixels PX and the scan driver circuit SDV. The data lines DL1 to DLn may extend in the second direction DR2 and may be connected to the pixels PX and the plurality of pad parts D-PD. The emission control lines EL1 to ELm may extend in the first direction DR1, and may be connected to the pixels PX and the emission driver circuit EDV.

The plurality of pad parts D-PD may be arranged in the first direction DR1. A certain number of data lines may be connected to each of the plurality of pad parts D-PD. Although four pad parts D-PD are illustrated as an example, the number of pad parts D-PD is not limited thereto. There may be provided as many pad parts D-PD as there are flexible films FCB1 to FCB4 (refer to FIG. 4). For example, the number of pad parts D-PD may be increased or decreased depending on the number of flexible films FCB1 to FCB4.

The plurality of pad parts D-PD may be connected with the flexible films FCB1 to FCB4, respectively. Each of the plurality of pad parts D-PD is electrically connected with a corresponding one of the data driver ICs DIC1 to DIC4 (refer to FIG. 4). The data driver ICs DIC1 to DIC4 may generate a plurality of data voltages, and the data voltages may be applied to the pixels PX through the plurality of pad parts D-PD and the data lines DL1 to DLn.

The scan driver circuit SDV may generate a plurality of scan signals, and the scan signals may be applied to the pixels PX through the scan lines SL1 to SLm. The emission driver circuit EDV may generate a plurality of emission control signals, and the emission control signals may be applied to the pixels PX through the emission control lines EL1 to ELm.

The pixels PX may receive the data voltages in response to the scan signals. The pixels PX may display an image by emitting light having luminance corresponding to the data voltages in response to the emission control signals.

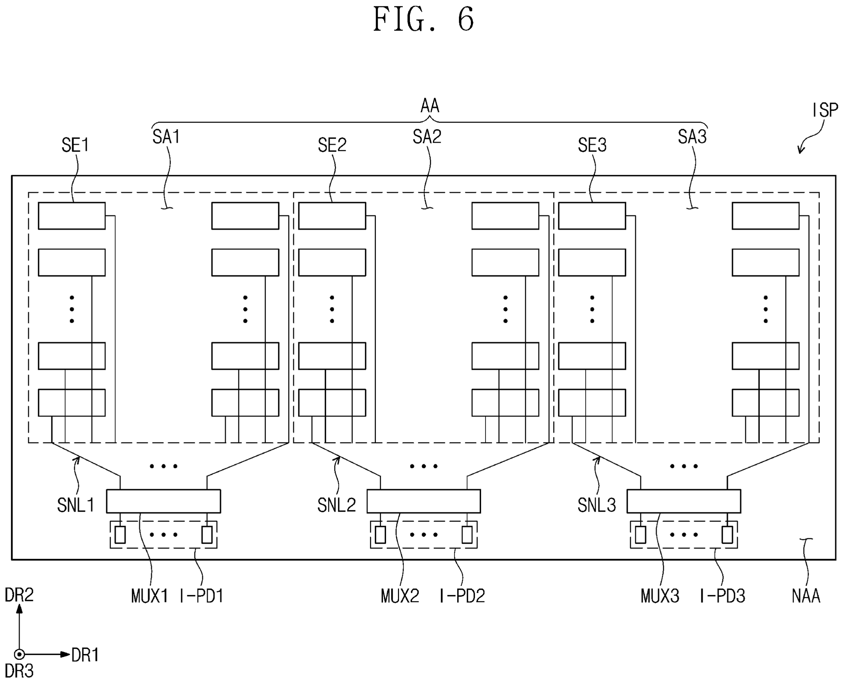

FIG. 6 is a plan view of an input-sensing layer according to one or more embodiments of the present disclosure.

Referring to FIG. 6, the input-sensing layer ISP includes a plurality of sensing electrodes SE1, SE2, and SE3 and trace lines SNL1, SNL2, and SNL3 connected to the sensing electrodes SE1, SE2, and SE3.

The input-sensing layer ISP may have long sides extending in the first direction DR1 and short sides extending in the second direction DR2. The corners of the input-sensing layer ISP that connect the long sides and the short sides of the input-sensing layer ISP may have an outwardly convex curved shape.

The input-sensing layer ISP may include an active area AA, and an inactive area NAA around the active area AA. The inactive area NAA may surround the active area AA. The active area AA may overlap the display area DP_DA (refer to FIG. 5), and the inactive area NAA may overlap the non-display area DP_NDA (refer to FIG. 5).

The active area AA may have a shape corresponding to the periphery of the input-sensing layer ISP. The active area AA may have long sides extending in the first direction DR1 and short sides extending in the second direction DR2.

The sensing electrodes SE1, SE2, and SE3 may be located in the active area AA. The sensing electrodes SE1, SE2, and SE3 may be arranged in the first direction DR1 and in the second direction DR2. The sensing electrodes SE1, SE2, and SE3 may be arranged in a matrix form to have unique coordinate information. For example, the boundaries between the sensing electrodes SE1, SE2, and SE3 are illustrated by lines. Substantially, the sensing electrodes SE1, SE2, and SE3 may be spaced apart from one another without contacting one another, and may be located in an island shape.

The sensing electrodes SE1, SE2, and SE3 may have the same shape. In one or more embodiments of the present disclosure, each of the sensing electrodes SE1, SE2, and SE3 may have a rectangular shape. However, the shape of each of the sensing electrodes SE1, SE2, and SE3 is not particularly limited. For example, each of the sensing electrodes SE1, SE2, and SE3 may have a shape in which two sides facing each other protrude in a sawtooth shape.

Among the sensing electrodes SE1, SE2, and SE3, the sensing electrodes located in the first sensing area SA1 are referred to as the first sensing electrodes SE1, the sensing electrodes located in the second sensing area SA2 are referred to as the second sensing electrodes SE2, and the sensing electrodes located in the third sensing area SA3 are referred to as the third sensing electrodes SE3.

The trace lines SNL1, SNL2, and SNL3 may be respectively connected to the sensing electrodes SE1, SE2, and SE3 in the active area AA, and may extend to the inactive area NAA. The trace lines SNL1, SNL2, and SNL3 are connected to the sensing electrodes SE1, SE2, and SE3 in a one-to-one correspondence. Among the trace lines SNL1, SNL2, and SNL3, the first trace lines SNL1 are located in the first sensing area SA1, the second trace lines SNL2 are located in the second sensing area SA2, and the third trace lines SNL3 are located in the third sensing area SA3.

In the active area AA of the input-sensing layer ISP, the trace lines SNL1, SNL2, and SNL3 and the sensing electrodes SE1, SE2, and SE3 may be located on different layers (e.g., different respective layers). Each of the trace lines SNL1, SNL2, and SNL3 is connected with a corresponding one of the plurality of sensing electrodes SE1, SE2, and SE3 through a contact hole. In the active area AA, each of the trace lines SNL1, SNL2, and SNL3 may overlap non-corresponding sensing electrodes among the plurality of sensing electrodes SE1, SE2, and SE3.

The input-sensing layer ISP may further include a plurality of pad parts I-PD1, I-PD2, and I-PD3. The plurality of pad parts I-PD1, I-PD2, and I-PD3 may be located in the inactive area NAA adjacent to the lower end of the input-sensing layer ISP. The trace lines SNL1, SNL2, and SNL3 may be connected to the pad parts I-PD1, I-PD2, and I-PD3. The pad parts I-PD1, I-PD2, and I-PD3 may be located at positions that do not overlap the pad parts D-PD of FIG. 5 when viewed from above the plane. The pad parts I-PD1, I-PD2, and I-PD3 may be connected with the touch flexible circuit film. Accordingly, the trace lines SNL1, SNL2, and SNL3 may be electrically connected to the first to third sensor controllers TIC1, TIC2, and TIC3 (refer to FIG. 4) through the pad parts I-PD1, I-PD2, and I-PD3 and the touch flexible circuit film. The sensing signals output from the first to third sensor controllers TIC1, TIC2, and TIC3 may be applied to the trace lines SNL1, SNL2, and SNL3 through the pad parts I-PD1, I-PD2, and I-PD3.

The plurality of pad parts I-PD1, I-PD2, and I-PD3 may be arranged in the first direction DR1. Although three pad parts I-PD1, I-PD2, and I-PD3 are illustrated as an example, the number of pad parts I-PD1, I-PD2, and I-PD3 is not limited thereto. As many pad parts I-PD1, I-PD2, and I-PD3 as the sensor controllers TIC1, TIC2, and TIC3 may be provided.

The input-sensing layer ISP may further include a plurality of MUX circuits MUX1, MUX2, and MUX3 located between the plurality of pad parts I-PD1, I-PD2, and I-PD3 and the trace lines SNL1, SNL2, and SNL3. The plurality of MUX circuits MUX1, MUX2, and MUX3 may locate in the inactive area NAA. As many MUX circuits MUX1, MUX2, and MUX3 as the sensor controllers TIC1 to TIC3 may be provided. The MUX circuits MUX1, MUX2, and MUX3 may be arranged in the first direction DR1.

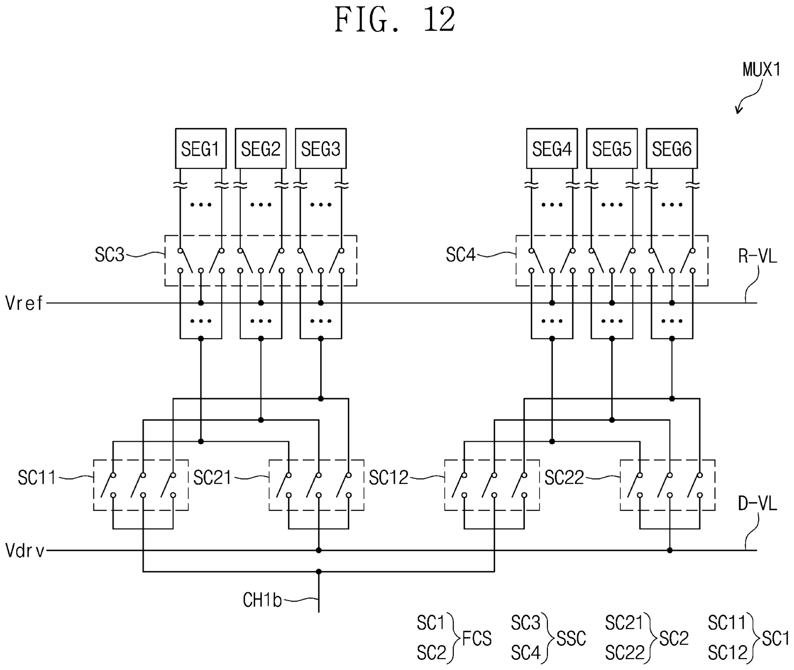

When the MUX circuits MUX1, MUX2, and MUX3 are provided, the number of pads included in each of the pad parts I-PD1, I-PD2, and I-PD3 may be smaller than the number of corresponding trace lines. For example, the number of pads included in the first pad part I-PD1 among the pad parts I-PD1, I-PD2, and I-PD3 may be less than the number of first trace lines SNL1 corresponding to the first pad part I-PD1. The first MUX circuit MUX1 among the MUX circuits MUX1, MUX2, and MUX3 may selectively apply sensing signals output from the first pad part I-PD1 to some of the first trace lines SNL1. A circuit configuration of the first MUX circuit MUX1 of the MUX circuits MUX1, MUX2, and MUX3 will be described in detail with reference to FIG. 12. Although only the circuit configuration of the first MUX circuit MUX1 is shown in FIG. 12 as an example, the second and third MUX circuits MUX2 and MUX3 may be configured similarly to the first MUX circuit MUX1.

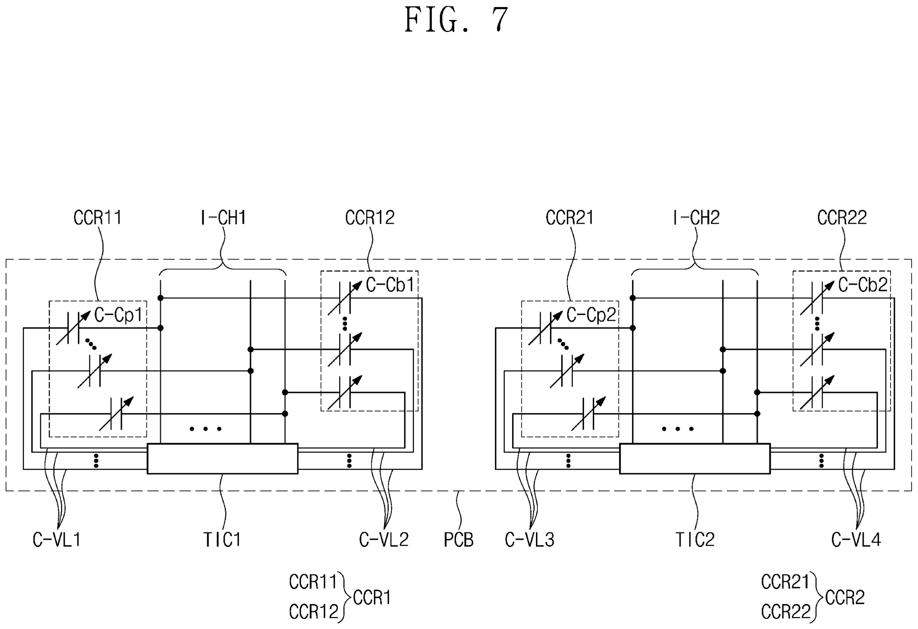

FIG. 7 is a circuit diagram illustrating a compensation circuit according to one or more embodiments of the present disclosure.

Referring to FIG. 7, the display device DD (refer to FIG. 4) further includes the compensation circuit connected to at least one of the first to third sensor controllers TIC1, TIC2, and TIC3 (refer to FIG. 4). In one or more embodiments of the present disclosure, the first to third sensor controllers TIC1, TIC2, and TIC3 and the compensation circuit may be mounted (e.g., located) on the printed circuit board PCB. Although a first compensation circuit CCR1 connected to the first sensor controller TIC1 and a second compensation circuit CCR2 connected to the second sensor controller TIC2 are illustrated as an example in FIG. 7, the display device DD may further include a third compensation circuit connected to the third sensor controller TIC3. The first compensation circuit CCR1 is adjacent to the first sensor controller TIC1 on the printed circuit board PCB, and the second compensation circuit CCR2 is adjacent to the second sensor controller TIC2 on the printed circuit board PCB.

The first sensor controller TIC1 may include first output channels I-CH1 electrically connected to the first trace line SNL1 (refer to FIG. 6) through the first pad part I-PD1 (refer to FIG. 6) and the first MUX circuit MUX1 (refer to FIG. 6). In one or more embodiments of the present disclosure, the first compensation circuit CCR1 includes a first-first compensation circuit CCR11 and a first-second compensation circuit CCR12 connected to the first output channels I-CH1. The first-first compensation circuit CCR11 includes first compensation capacitors C-Cp1 connected between the first output channels I-CH1 and first compensation voltage lines C-VL1. The first-second compensation circuit CCR12 includes second compensation capacitors C-Cb1 connected between the first output channels I-CH1 and second compensation voltage lines C-VL2. Each of the first compensation capacitors C-Cp1 and the second compensation capacitors C-Cb1 may be configured in the form of a capacitor component, and may be directly mounted on the printed circuit board PCB. Alternatively, each of the first compensation capacitors C-Cp1 and the second compensation capacitors C-Cb1 may be formed by placing, on the printed circuit board PCB, electrode layers facing each other with an insulating layer therebetween.

Although FIG. 7 illustrates the structure in which the first compensation capacitors C-Cp1 are connected to the first output channels I-CH1 in a one-to-one correspondence, one or more embodiments of the present disclosure is not limited thereto. For example, the first compensation capacitors C-Cp1 may be connected to only selected output channels selected from the first output channels I-CH1. In addition, although FIG. 7 illustrates the structure in which the second compensation capacitors C-Cb1 are connected to the first output channels I-CH1 in a one-to-one correspondence, the present disclosure is not limited thereto. For example, the second compensation capacitors C-Cb1 may be connected to only selected output channels selected from the first output channels I-CH1. Here, a selected output channel(s) may be one or more output channels electrically connected to sensing electrodes located in the first sensing area SA1 so as to be adjacent to the boundary between the first sensing area SA1 and the second sensing area SA2 (refer to FIG. 4).

The first compensation circuit CCR1 may include both the first compensation capacitors C-Cp1 and the second compensation capacitors C-Cb1. However, one or more embodiments of the present disclosure is not limited thereto, and the first compensation circuit CCR1 may include only the first compensation capacitors C-Cp1, or may include only the second compensation capacitors C-Cb1, in one or more embodiments.

The first compensation voltage lines C-VL1 and the second compensation voltage lines C-VL2 may be connected to the first sensor controller TIC1. The first sensor controller TIC1 may apply first compensation voltages to the first compensation voltage lines C-VL1, and may adjust (e.g., vary) the voltage levels of the first compensation voltages. The first sensor controller TIC1 may apply second compensation voltages to the second compensation voltage lines C-VL2, and may adjust (e.g., vary) the voltage levels of the second compensation voltages. The first compensation voltages may be different from the second compensation voltages.

The second sensor controller TIC2 may include second output channels I-CH2 electrically connected to the second trace line SNL2 (refer to FIG. 6) through the second pad part I-PD2 (refer to FIG. 6) and the second MUX circuit MUX2 (refer to FIG. 6). The second compensation circuit CCR2 includes a second-first compensation circuit CCR21 and a second-second compensation circuit CCR22 connected to the second output channels I-CH2. The second-first compensation circuit CCR21 includes third compensation capacitors C-Cp2 connected between the second output channels I-CH2 and third compensation voltage lines C-VL3. The second-second compensation circuit CCR22 includes fourth compensation capacitors C-Cb2 connected between the second output channels I-CH2 and fourth compensation voltage lines C-VL4.

Each of the third compensation capacitors C-Cp2 and the fourth compensation capacitors C-Cb2 may be configured in the form of a capacitor component, and may be directly mounted on the printed circuit board PCB. Alternatively, each of the third compensation capacitors C-Cp2 and the fourth compensation capacitors C-Cb2 may be formed by placing, on the printed circuit board PCB, electrode layers facing each other with an insulating layer therebetween.

Although FIG. 7 illustrates the structure in which the third compensation capacitors C-Cp2 are connected to the second output channels I-CH2 in a one-to-one correspondence, one or more embodiments of the present disclosure is not limited thereto. For example, the third compensation capacitors C-Cp2 may be connected to only selected output channels selected from the second output channels I-CH2. In addition, although FIG. 7 illustrates the structure in which the fourth compensation capacitors C-Cb2 are connected to the second output channels I-CH2 in a one-to-one correspondence, the present disclosure is not limited thereto. For example, the fourth compensation capacitors C-Cb2 may be connected to only selected output channels selected from the second output channels I-CH2. Here, the selected output channels may be output channels electrically connected to sensing electrodes located in the second sensing area SA2 so as to be adjacent to the boundary between the first sensing area SA1 and the second sensing area SA2 (refer to FIG. 4).

The second compensation circuit CCR2 may include both the third compensation capacitors C-Cp2 and the fourth compensation capacitors C-Cb2. However, one or more embodiments of the present disclosure is not limited thereto, and the second compensation circuit CCR2 may include only the third compensation capacitors C-Cp2, or may include only the fourth compensation capacitors C-Cb2, in one or more embodiments.

The third compensation voltage lines C-VL3 and the fourth compensation voltage lines C-VL4 may be connected to the second sensor controller TIC2. The second sensor controller TIC2 may apply third compensation voltages to the third compensation voltage lines C-VL3, and may adjust (e.g., vary) the voltage levels of the third compensation voltages. The second sensor controller TIC2 may apply fourth compensation voltages to the fourth compensation voltage lines C-VL4, and may adjust (e.g., vary) the voltage levels of the fourth compensation voltages.

Although FIG. 7 illustrates the structure in which the first compensation circuit CCR1 and the second compensation circuit CCR2 are connected to the first sensor controller TIC1 and the second sensor controller TIC2, respectively, one or more embodiments of the present disclosure is not limited thereto. A compensation circuit may be connected to only one of the first sensor controller TIC1 or the second sensor controller TIC2, in one or more embodiments.

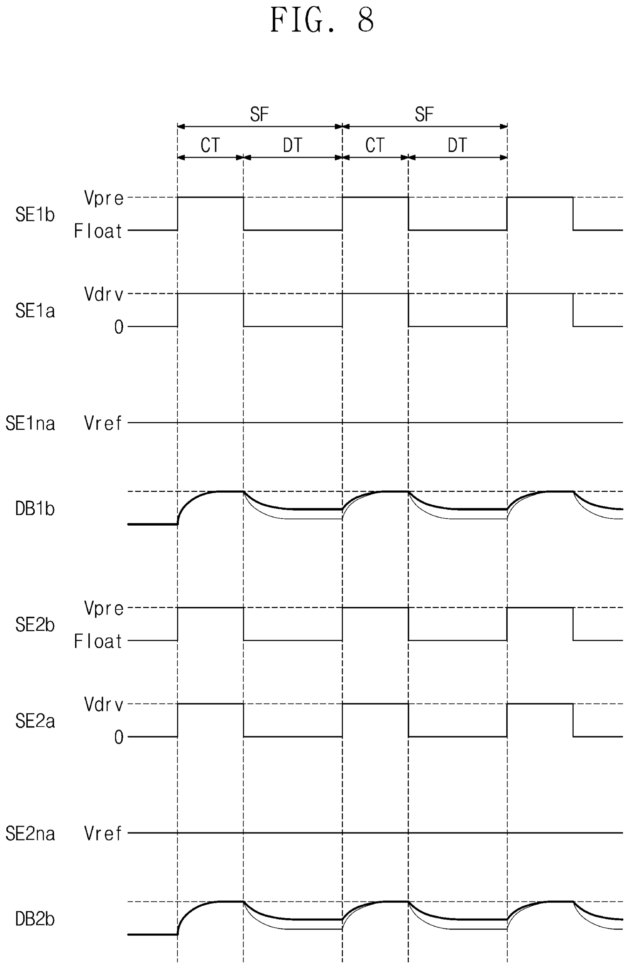

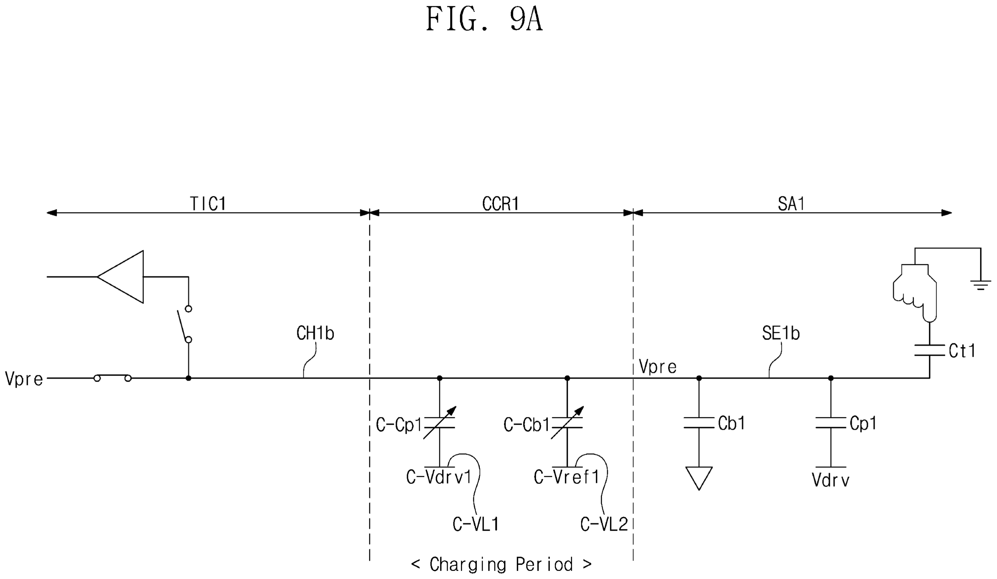

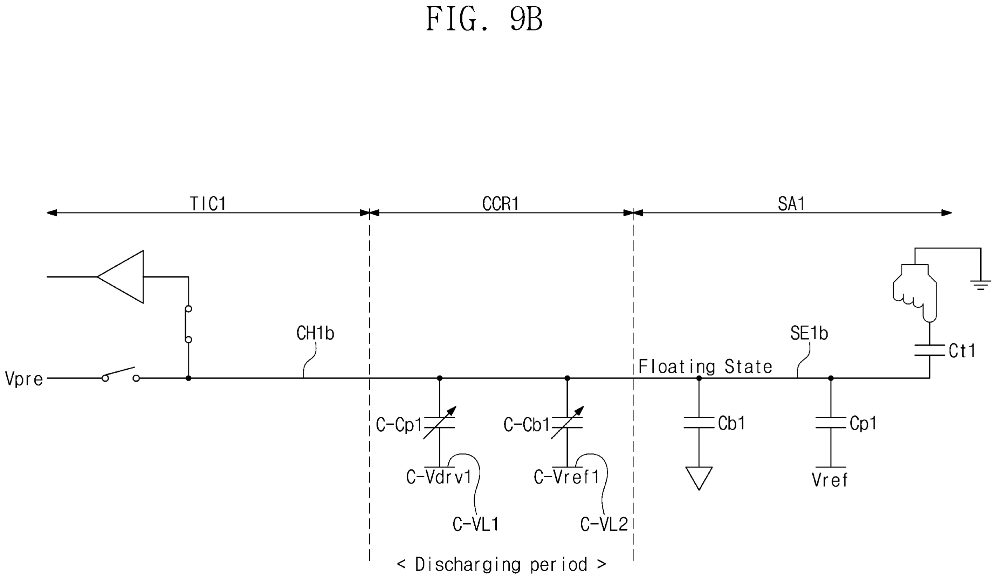

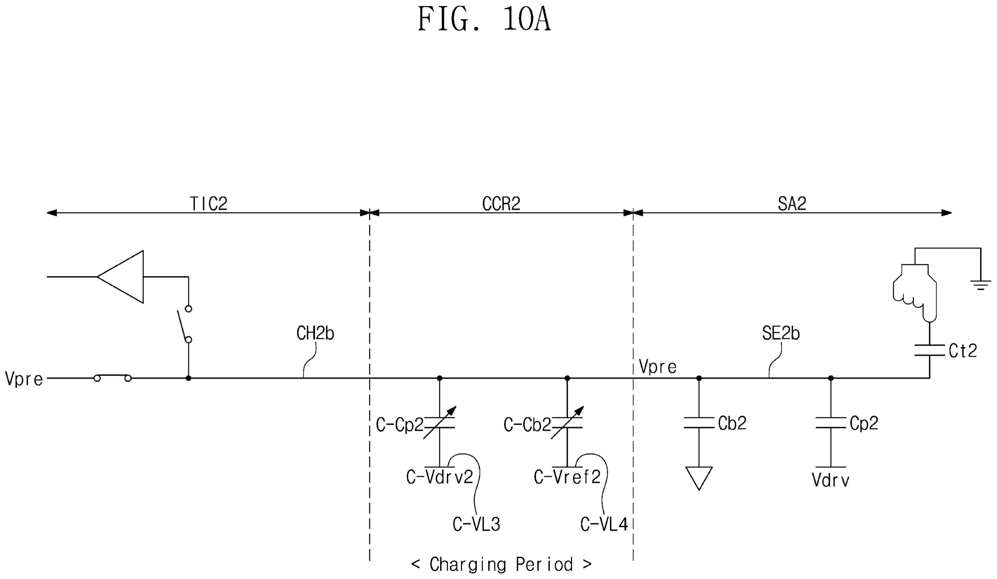

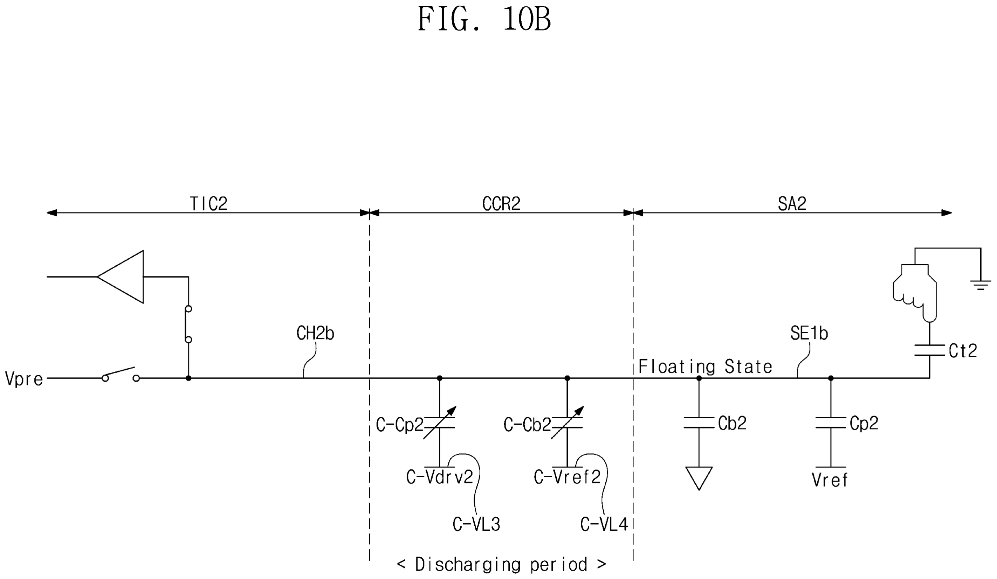

FIG. 8 is a waveform diagram illustrating voltages applied to a first boundary-sensing electrode and a second boundary-sensing electrode among the sensing electrodes illustrated in FIG. 6. FIGS. 9A and 9B are circuit diagrams illustrating states of the first boundary-sensing electrode illustrated in FIG. 8 in the charging period and the discharging period. FIGS. 10A and 10B are circuit diagrams illustrating states of the second boundary-sensing electrode illustrated in FIG. 8 in the charging period and the discharging period.

Referring to FIG. 8, the first to third sensor controllers TIC1 to TIC3 (refer to FIG. 4) may sense changes in the charges of the sensing electrodes SE1, SE2, and SE3 (refer to FIG. 6) on a sensing frame SF-by-sensing frame SF basis. The sensing frame SF may include a charging period CT and a discharging period DT. In FIG. 8, a voltage applied to a first target-sensing electrode selected from the first sensing electrodes SE1 (refer to FIG. 6) connected to the first sensor controller TIC1 is illustrated as an example. Here, the first target-sensing electrode may include the first boundary-sensing electrode SE1b adjacent to the boundary between the first sensing area SA1 and the second sensing area SA2. Furthermore, in FIG. 8, a voltage applied to a second target-sensing electrode selected from the second sensing electrodes SE2 (refer to FIG. 6) connected to the second sensor controller TIC2 is illustrated as an example. Here, the second target-sensing electrode may include the second boundary-sensing electrode SE2b adjacent to the boundary between the first sensing area SA1 and the second sensing area SA2.

The first sensor controller TIC1 may apply a pre-charge voltage Vpre to the first boundary-sensing electrode SE1b during the charging period CT. The first sensor controller TIC1 may apply a driving voltage Vdrv to a first adjacent sensing electrode SE1a adjacent to the first boundary-sensing electrode SE1b during the charging period CT.

The first sensor controller TIC1 may electrically float the first boundary-sensing electrode SE1b during the discharging period DT. In addition, the first sensor controller TIC1 may apply a reference voltage Vref (e.g., a ground voltage, or about 0 V) to the first adjacent sensing electrode SE1a during the discharging period DT.

Meanwhile, during the charging period CT and the discharging period DT, the reference voltage Vref may be applied to a first non-adjacent sensing electrode SE1na that is not adjacent to the first boundary-sensing electrode SE1b.

The first boundary-sensing electrode SE1b, the first adjacent sensing electrode SE1a, and the first non-adjacent sensing electrode SE1na are included in the first sensing electrodes SE1 located in the first sensing area SA1, and are electrically connected with the first sensor controller TIC1.

The second sensor controller TIC2 may apply the pre-charge voltage Vpre to the second boundary-sensing electrode SE2b during the charging period CT. The second sensor controller TIC2 may apply the driving voltage Vdrv to a second adjacent sensing electrode SE2a adjacent to the second boundary-sensing electrode SE2b during the charging period CT.

The second sensor controller TIC2 may electrically float the second boundary-sensing electrode SE2b during the discharging period DT. In addition, the second sensor controller TIC2 may apply the reference voltage Vref (e.g., the ground voltage, or about 0 V) to the second adjacent sensing electrode SE2a during the discharging period DT.

Meanwhile, during the charging period CT and the discharging period DT, the reference voltage Vref may be applied to a second non-adjacent sensing electrode SE2na that is not adjacent to the second boundary-sensing electrode SE2b.

The second boundary-sensing electrode SE2b, the second adjacent sensing electrode SE2a, and the second non-adjacent sensing electrode SE2na are included in the second sensing electrodes SE2 located in the second sensing area SA2 and are electrically connected with the second sensor controller TIC2.

Referring to FIGS. 9A and 9B, the first boundary-sensing electrode SE1b forms a first parasitic capacitor Cb1 with the second electrode CE (refer to FIG. 3A) of the display panel DP (refer to FIG. 3A), and forms a first sensing capacitor Cp1 with the first adjacent sensing electrode SE1a. In addition, when a user input (e.g., a touch input using a finger of the user) occurs, the first boundary-sensing electrode SE1b may form a first touch capacitor Ct1 with the finger of the user.

The first compensation capacitor C-Cp1 and the second compensation capacitor C-Cb1 are connected to an output channel (hereinafter, referred to as the first boundary output channel CH1b) electrically connected to the first boundary-sensing electrode SE1b among the first output channels I-CH1 of the first sensor controller TIC1. The first compensation capacitor C-Cp1 is formed between the first boundary output channel CH1b and the first compensation voltage line C-VL1, and the second compensation capacitor C-Cb1 is formed between the first boundary output channel CH1b and the second compensation voltage line C-VL2.

A first compensation voltage C-Vdrv1 is applied to the first compensation voltage line C-VL1, and a second compensation voltage C-Vref1 is applied to the second compensation voltage line C-VL2. The first compensation voltage C-Vdrv1 and the second compensation voltage C-Vref1 may be varied when the first boundary-sensing electrode SE1b is connected with the first boundary output channel CH1b. The first compensation voltage C-Vdrv1 may be a voltage varied to have a level difference from the driving voltage Vdrv, and the second compensation voltage C-Vref1 may be a voltage varied to have a level difference from the reference voltage Vref.

Here, the amount of charge charged in the first sensing capacitor Cp1 during the charging period CT in which the pre-charge voltage Vpre is applied to the first boundary-sensing electrode SE1b may be referred to as a first amount of charge, and the amount of charge charged in the first sensing capacitor Cp1 during the discharging period DT in which the first boundary-sensing electrode SE1b is in a floating state may be referred to as a second amount of charge.

"DB1b" (refer to FIG. 8) may be defined as first sensing data output through the first boundary-sensing electrode SE1b during the discharging period DT. Because the first amount of charge and the second amount of charge are equal to each other, according to the law of conservation of electric charge, the first sensing data DB1b may vary depending on the size of the first sensing capacitor Cp1, the size of the first parasitic capacitor Cb1, the size of the first compensation capacitor C-Cp1, and/or the size of the second compensation capacitor C-Cb1.

Referring to FIGS. 10A and 10B, the second boundary-sensing electrode SE2b forms a second parasitic capacitor Cb2 with the second electrode CE (refer to FIG. 3A) of the display panel DP (refer to FIG. 3A), and forms a second sensing capacitor Cp2 with the second adjacent sensing electrode SE2a. In addition, when a user input (e.g., a touch input using a finger of the user) occurs, the second boundary-sensing electrode SE2b may form a second touch capacitor Ct2 with the finger of the user.

The third compensation capacitor C-Cp2 and the fourth compensation capacitor C-Cb2 are connected to an output channel (hereinafter, referred to as the second boundary output channel CH2b) electrically connected to the second boundary-sensing electrode SE2b among the second output channels I-CH2 of the second sensor controller TIC2. The third compensation capacitor C-Cp2 is formed between the second boundary output channel CH2b and the third compensation voltage line C-VL3, and the fourth compensation capacitor C-Cb2 is formed between the second boundary output channel CH2b and the fourth compensation voltage line C-VL4.

A third compensation voltage C-Vdrv2 is applied to the third compensation voltage line C-VL3, and a fourth compensation voltage C-Vref2 is applied to the fourth compensation voltage line C-VL4. The third compensation voltage C-Vdrv2 and the fourth compensation voltage C-Vref2 may be varied when the second boundary-sensing electrode SE2b is connected with the second boundary output channel CH2b. The third compensation voltage C-Vdrv2 may be a voltage varied to have a level difference from the driving voltage Vdrv, and the fourth compensation voltage C-Vref2 may be a voltage varied to have a level difference from the reference voltage Vref.

Here, the amount of charge charged in the second sensing capacitor Cp2 during the charging period CT in which the pre-charge voltage Vpre is applied to the second boundary-sensing electrode SE2b may be referred to as a third amount of charge, and the amount of charge charged in the second sensing capacitor Cp2 during the discharging period DT in which the second boundary-sensing electrode SE2b is in a floating state may be referred to as a fourth amount of charge.

"DB2b" (refer to FIG. 8) may be defined as second sensing data output through the second boundary-sensing electrode SE2b during the discharging period DT. Because the third amount of charge and the fourth amount of charge are equal to each other, according to the law of conservation of electric charge, the second sensing data DB2b may vary depending on the size of the second sensing capacitor Cp2, the size of the second parasitic capacitor Cb2, the size of the third compensation capacitor C-Cp2, and/or the size of the fourth compensation capacitor C-Cb2.

In one or more embodiments of the present disclosure, the length of a line connecting the first boundary-sensing electrode SE1b and the first sensor controller TIC1 (e.g., a first line length) may be different from the length of a line connecting the second boundary-sensing electrode SE2b and the second sensor controller TIC2 (e.g., a second line length). As the difference between the first line length and the second line length is increased, sensing performance may deteriorate between the first sensing area SA1 and the second sensing area SA2. That is, as the difference between the first line length and the second line length is increased, the difference between the first sensing data DB1b and the second sensing data DB2b may be increased. The first to fourth compensation capacitors C-Cp1, C-Cb1, C-Cp2, and C-Cb2 may compensate for the difference between the first line length and the second line length (e.g., the difference between the first sensing data DB1b and the second sensing data DB2b).

The difference between the first compensation voltage C-Vdrv1 and the driving voltage Vdrv, and the difference between the second compensation voltage C-Vref1 and the reference voltage Vref, may be determined depending on the difference between the first line length and the second line length. In addition, the difference between the third compensation voltage C-Vdrv2 and the driving voltage Vdrv, and the difference between the fourth compensation voltage C-Vref2 and the reference voltage Vref, may also be determined depending on the difference between the first line length and the second line length.

As described above, the difference between the first line length and the second line length may be compensated for by varying the voltage levels of the first to fourth compensation voltages C-Vdrv1, C-Vref1, C-Vdrv2, and C-Vref2, and thus, the deterioration in sensing performance between the first sensing area SA1 and the second sensing area SA2 may be reduced or prevented.

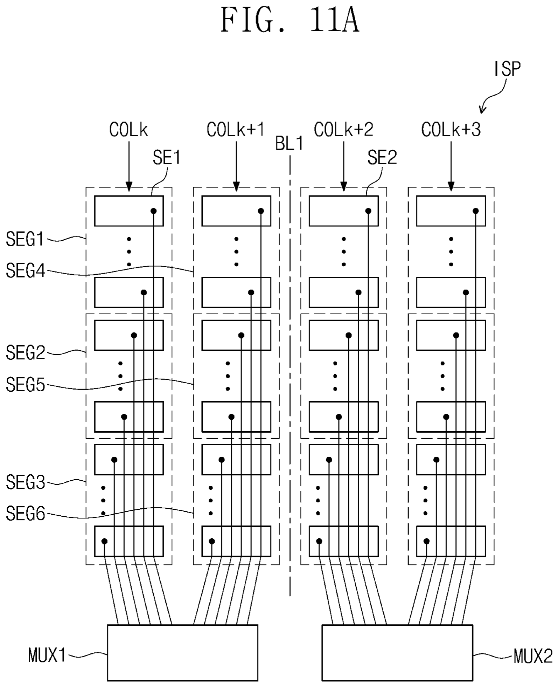

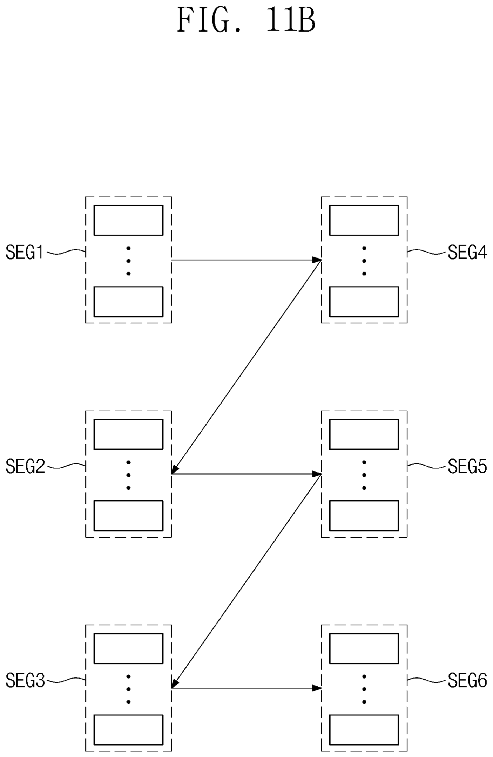

FIG. 11A is a block diagram illustrating the first MUX circuit, the second MUX circuit, the first sensing electrodes, and the second sensing electrodes according to one or more embodiments of the present disclosure. FIG. 11B is a view illustrating the sensing sequence of the k^{th} sensing electrode column and the (k+1)^{th} sensing electrode column illustrated in FIG. 11A.

Referring to FIG. 11A, the k^{th} sensing electrode column COLk and the (k+1)^{th} sensing electrode column COLk+1 are located on a left side with respect to the first boundary line BL1. The (k+2)^{th} sensing electrode column COLk+2 and the (k+3)^{th} sensing electrode column COLk+3 are located on a right side with respect to the first boundary line BL1. The k^{th} sensing electrode column COLk and the (k+1)^{th} sensing electrode column COLk+1 are located in the first sensing area SA1 (refer to FIG. 6), and the (k+2)^{th} sensing electrode column COLk+2 and the (k+3)^{th} sensing electrode column COLk+3 are located in the second sensing area SA2 (refer to FIG. 6).

Each sensing electrode column may include a plurality of sensing groups. A plurality of sensing electrodes may be included in each sensing group. In FIG. 11A, three sensing groups (hereinafter, referred to as first to third sensing groups SEG1, SEG2, and SEG3) included in the k^{th} sensing electrode column COLk, and three sensing groups (hereinafter, referred to as fourth to sixth sensing groups SEG4, SEG5, and SEG6) included in the (k+1)^{th} sensing electrode column COLk+1 are illustrated as an example.

The first MUX circuit MUX1 may select one sensing group to be sensed from among the first to sixth sensing groups SEG1 to SEG6 and may apply the pre-charge voltage Vpre (refer to FIG. 8) to the selected sensing group. As illustrated in FIG. 11B, the first MUX circuit MUX1 may select sensing groups in the order of the first sensing group SEG1, the fourth sensing group SEG4, the second sensing group SEG2, the fifth sensing group SEG5, the third sensing group SEG3, and the sixth sensing group SEG6. However, the order of selecting sensing groups is not limited thereto and may be modified in various ways.

The second MUX circuit MUX2 may operate similarly to the first MUX circuit MUX1. Therefore, the first MUX circuit MUX1 will hereinafter be described in detail, and description of the second MUX circuit MUX2 will be omitted.

FIG. 12 is a block diagram for explaining the configuration and operation of the first MUX circuit illustrated in FIG. 11A.

Referring to FIG. 12, the first MUX circuit MUX1 may include a first stage selection circuit FSC and a second stage selection circuit SSC. The first stage selection circuit FSC includes a first selection circuit SC1 connected to the first boundary output channel CH1b, and a second selection circuit SC2 connected to a driving voltage line D-VL.

The first selection circuit SC1 may include a first-first selection circuit SC11 connected to the first to third sensing groups SEG1 to SEG3, and a first-second selection circuit SC12 connected to the fourth to sixth sensing groups SEG4 to SEG6. The first-first selection circuit SC11 is located between the first boundary output channel CH1b and the first to third sensing groups SEG1 to SEG3, and switches connection between the first boundary output channel CH1b and one of the first to third sensing groups SEG1 to SEG3. The first-second selection circuit SC12 is located between the first boundary output channel CH1b and the fourth to sixth sensing groups SEG4 to SEG6, and switches connection between the first boundary output channel CH1b and one of the fourth to sixth sensing groups SEG4 to SEG6.

Depending on operation of the first-first selection circuit SC11 and the first-second selection circuit SC12, the pre-charge voltage output from the first boundary output channel CH1b may be applied to one of the first to sixth sensing groups SEG1 to SEG6. Sensing electrodes of sensing groups selected by the first-first selection circuit SC11 and the first-second selection circuit SC12 may be referred to as target-sensing electrodes.

The second selection circuit SC2 may include a second-first selection circuit SC21 connected to the first to third sensing groups SEG1 to SEG3, and a second-second selection circuit SC22 connected to the fourth to sixth sensing groups SEG4 to SEG6. The second-first selection circuit SC21 is located between the driving voltage line D-VL and the first to third sensing groups SEG1 to SEG3, and switches connection between the driving voltage line D-VL and one of the first to third sensing groups SEG1 to SEG3. The second-second selection circuit SC22 is located between the driving voltage line D-VL and the fourth to sixth sensing groups SEG4 to SEG6, and switches connection between the driving voltage line D-VL and one of the fourth to sixth sensing groups SEG4 to SEG6.

Depending on operation of the second-first selection circuit SC21 and the second-second selection circuit SC22, the driving voltage Vdrv may be applied to one of the first to sixth sensing groups SEG1 to SEG6. Sensing electrodes of sensing groups selected by the second-first selection circuit SC21 and the second-second selection circuit SC22 may be referred to as adjacent sensing electrodes.

The second stage selection circuit SSC includes a third selection circuit SC3 connected to the first-first selection circuit SC11 and the second-first selection circuit SC21, and a fourth selection circuit SC4 connected to the first-second selection circuit SC12 and the second-second selection circuit SC22. The third selection circuit SC3 may apply a voltage output from the first-first selection circuit SC11 or the second-first selection circuit SC21 to one of the first to third sensing groups SEG1 to SEG3, or may connect a reference voltage line R-VL to which the reference voltage Vref is applied to one of the first to third sensing groups SEG1 to SEG3. When the reference voltage line R-VL is connected with one of the first to third sensing groups SEG1 to SEG3 by the third selection circuit SC3, the reference voltage Vref may be applied to the corresponding sensing group. Sensing electrodes of the corresponding sensing group to which the reference voltage Vref is applied may be referred to as non-adjacent sensing electrodes.

The fourth selection circuit SC4 may apply a voltage output from the first-second selection circuit SC12 or the second-second selection circuit SC22 to one of the fourth to sixth sensing groups SEG4 to SEG6, or may connect the reference voltage line R-VL to one of the fourth to sixth sensing groups SEG4 to SEG6. When the reference voltage line R-VL is connected with one of the fourth to sixth sensing groups SEG4 to SEG6 by the fourth selection circuit SC4, the reference voltage Vref may be applied to the corresponding sensing group. Sensing electrodes of the corresponding sensing group to which the reference voltage Vref is applied may be referred to as non-adjacent sensing electrodes.

As described above, one of the pre-charge voltage Vpre, the driving voltage Vdrv, or the reference voltage Vref may be applied to the sensing electrodes of the first to sixth sensing groups SEG1 to SEG6 by the first MUX circuit MUX1.

A display device according to one or more embodiments may be applied to various electronic devices. An electronic device according to one or more embodiments may include the display device described above, and may further include modules or devices having other additional functions.

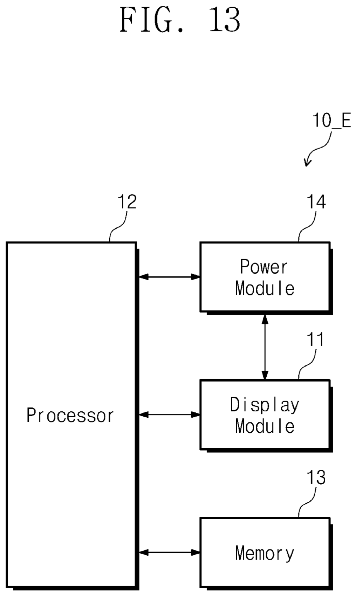

FIG. 13 is a block diagram of an electronic device according to one or more embodiments.

Referring to FIG. 13, the electronic device 10_E according to one or more embodiments may include a display module 11, a processor 12, a memory 13, and a power module 14. The display module 11 may correspond to the display device DD described above.

The processor 12 may include at least one of a central processing unit (CPU), an application processor (AP), a graphic processing unit (GPU), a communication processor (CP), an image signal processor (ISP), or a controller.

Data information required for operation of the processor 12 or the display module 11 may be stored in the memory 13. When the processor 12 executes an application stored in the memory 13, an image data signal and/or an input control signal may be transferred to the display module 11, and the display module 11 may process the provided signal and may output image information through a display screen.

The power module 14 may include a power supply module, such as a power adaptor or a battery device, and a power conversion module that converts power supplied by the power supply module and generates power required for operation of the electronic device 10_E.

At least one of the components of the electronic device 10_E described above may be included in the display device according to the embodiments described above. In addition, some of the separate modules functionally included in one module may be included in the display device, and the others may be provided separately from the display device. For example, the display device may include the display module 11, and the processor 12, the memory 13, and the power module 14 may be provided in the form of other devices within the electronic device 10_E rather than the display device.

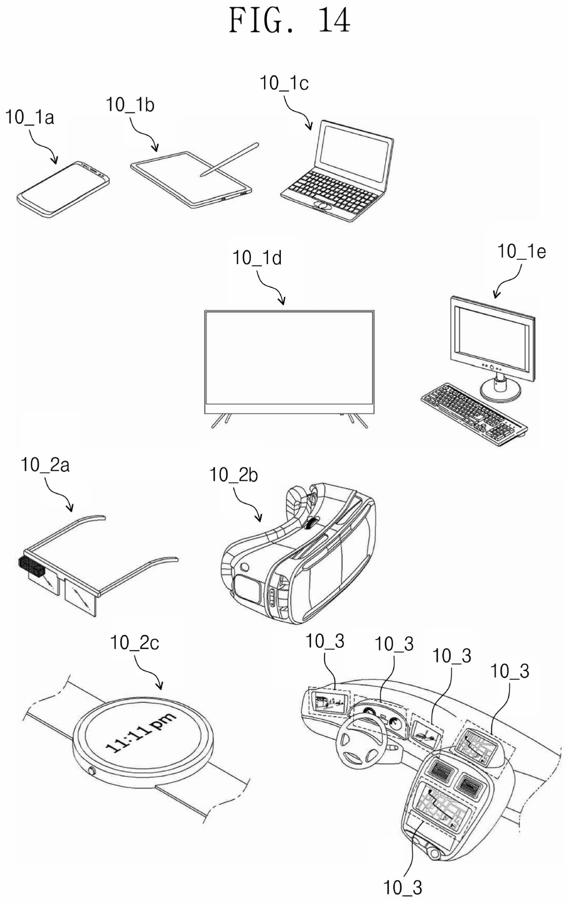

FIG. 14 illustrates schematic views of electronic devices according to various embodiments.

Referring to FIG. 14, various electronic devices, to which the display device according to the embodiments is applied, may include not only an electronic device for displaying an image, such as a smart phone 10_1a, a tablet PC 10_1b, a laptop computer 10_1c, a TV 10_1d, or a desk monitor 10_1e, but also a wearable electronic device, such as smart glasses 10_2a, a head mounted display 10_2b, or a smart watch 10_2c, which includes a display module, and a vehicle electronic device 10_3, such as a center information display (CID) located on an instrument panel, a center fascia, or a dashboard of a vehicle or a room mirror display, which includes a display module.

According to the present disclosure, the compensation circuit including the compensation capacitor is connected to at least one of the sensor controllers. The compensation circuit may compensate for the difference in length between the lines that connect the sensor controllers and the corresponding sensing electrodes. The magnitude of the compensation voltage applied to the compensation capacitor may be adjusted depending on the length difference, and thus deterioration in sensing performance at the boundaries between the sensing areas where there is a large or significant difference in length between the lines may be reduced or prevented. Accordingly, the display device may have substantially uniform sensing performance in the entire area.

While the present disclosure has been described with reference to embodiments thereof, it will be apparent to those of ordinary skill in the art that various changes and modifications may be made thereto without departing from the scope of the present disclosure as set forth in the following claims.

## Claims

1. A display device (DD) comprising:
a display panel (DP) comprising a pixel (PX);
an input-sensing layer (ISP) above the display panel (DP) and comprising sensing electrodes (SE1, SE2, SE3), and trace lines (SNL1, SNL2, SNL3) connected to the sensing electrodes (SE1, SE2, SE3);
a first sensor controller (TIC1) comprising first output channels (I-CH1) electrically connected to first trace lines (SNL1) among the trace lines (SNL1, SNL2, SNL3);
a second sensor controller (TIC2) comprising second output channels (I-CH2) electrically connected to second trace lines (SNL2) among the trace lines (SNL1, SNL2, SNL3); and
a compensation circuit (CCR1, CCR2) connected to at least one of the first sensor controller (TIC1) or the second sensor controller (TIC2), and comprising compensation capacitors (C-Cp1, C-Cb1, C-Cp2, C-Cb2) respectively connected between one output channel among the first output channels (I-CH1) and the second output channels (I-CH2) and at least one compensation voltage line (C-VL1, C-VL2, C-VL3, C-VL4) configured to receive at least one compensation voltage (C-Vdrv1, C-Vref1, C-Vdrv2, C-Vref2),
wherein at least one of the first sensor controller (TIC1) or the second sensor controller (TIC2) is configured to adjust a voltage level of the at least one compensation voltage (C-Vdrv1, C-Vref1, C-Vdrv2, C-Vref2) when a target-sensing electrode among the sensing electrodes (SE1, SE2, SE3) is connected with the one output channel among the first output channels (I-CH1) and the second output channels (I-CH2).

2. The display device of claim 1, wherein the compensation capacitors (C-Cp1, C-Cb1, C-Cp2, C-Cb2) comprise:
a first compensation capacitor (C-Cp1) connected between a first compensation voltage line (C-VL1) of the at least one compensation voltage line (C-VL1, C-VL2, C-VL3, C-VL4) and the one output channel; and
a second compensation capacitor (C-Cb1) connected between a second compensation voltage line (C-VL2) of the at least one compensation voltage line (C-VL1, C-VL2, C-VL3, C-VL4) and the one output channel,
wherein the first compensation voltage line (C-VL1) receives a first compensation voltage (C-Vdrv1) of the at least one compensation voltage (C-Vdrv1, C-Vref1, C-Vdrv2, C-Vref2), and
wherein the second compensation voltage line (C-VL2) receive a second compensation voltage (C-Vref1) of the at least one compensation voltage (C-Vdrv1, C-Vref1, C-Vdrv2, C-Vref2), which is different from the first compensation voltage (C-Vdrv1).

3. The display device of claim 2, wherein a voltage level of at least one of the first compensation voltage (C-Vdrv1) or the second compensation voltage (C-Vref1) is configured to be adjusted when the one output channel is connected with the target-sensing electrode.

4. The display device of claim 2 or 3, wherein an adjacent sensing electrode (SE1, SE2, SE3) adjacent to the target-sensing electrode is configured to receive a driving voltage (Vdrv), and
wherein a non-adjacent sensing electrode (SE1, SE2, SE3) not adjacent to the target-sensing electrode is configured to receive a reference voltage (Vref).

5. The display device of claim 4, wherein the first compensation voltage (C-Vdrv1) is configured to be varied to have a level difference from the driving voltage (Vdrv), and
wherein the second compensation voltage (C-Vref1) is configured to be varied to have a level difference from the reference voltage (Vref).

6. The display device of one of the preceding claims, further comprising:
a first MUX circuit (MUX1) connected between the first trace lines (SNL1) and the first output channels (I-CH1); and
a second MUX circuit (MUX2) connected between the second trace lines (SNL2) and the second output channels (I-CH2).

7. The display device of claim 6, wherein the input-sensing layer (ISP) comprises an active area where the sensing electrodes are located and an inactive area adjacent to the active area and where the first MUX circuit (MUX1) and the second MUX circuit (MUX2) are located.

8. The display device of one of the preceding claims, further comprising:
a flexible film (FCB1, FCB2, FCB3, FCB4) connected to the display panel (DP); and
a printed circuit board (PCB) connected to the flexible film (FCB1, FCB2, FCB3, FCB4), and
wherein the first sensor controller (TIC1) and the second sensor controller (TIC2) are located on the printed circuit board (PCB).

9. The display device of claim 8, wherein the compensation capacitors (C-Cp1, C-Cb1, C-Cp2, C-Cb2) are above the printed circuit board (PCB) and are connected to the at least one of the first sensor controller (TIC1) or the second sensor controller (TIC2) through the at least one compensation voltage line (C-VL1, C-VL2, C-VL3, C-VL4).

10. The display device of one of the preceding claims, wherein the input-sensing layer (ISP) comprises a first sensing area (SA1) where first sensing electrodes (SE1) among the sensing electrodes (SE1, SE2, SE3) are located and a second sensing area (SA2) where second sensing electrodes (SE2) among the sensing electrodes (SE1, SE2, SE3) are located,
wherein the first sensor controller (TIC1) is electrically connected to the first sensing electrodes (SE1), and
wherein the second sensor controller (TIC2) is electrically connected to the second sensing electrodes (SE2).

11. The display device of claim 10, wherein the compensation circuit (CCR1, CCR2) is electrically connected to a first boundary-sensing electrode (SE1b), which is adjacent to a boundary between the first sensing area (SA1) and the second sensing area (SA2), among the first sensing electrodes (SE1), and is electrically connected to a second boundary-sensing electrode (SE2b), which is adjacent to the boundary, among the second sensing electrodes (SE2).

12. The display device of claim 11, wherein, when the first boundary-sensing electrode (SE1b) is connected to a first boundary output channel (CH1b) among the first output channels (I-CH1), the first sensor controller (TIC1) is configured to vary the voltage level of the at least one compensation voltage (C-Vdrv1, C-Vref1, C-Vdrv2, C-Vref2) applied to at least one of the compensation capacitors (C-Cp1, C-Cb1, C-Cp2, C-Cb2) connected to the first boundary output channel (CH1b), and
wherein, when the second boundary-sensing electrode (SE2b) is connected to a second boundary output channel (CH2b) among the second output channels (I-CH2), the second sensor controller (TIC2) is configured to vary the voltage level of the at least one compensation voltage (C-Vdrv1, C-Vref1, C-Vdrv2, C-Vref2) applied to at least one of the compensation capacitors (C-Cp1, C-Cb1, C-Cp2, C-Cb2) connected to the second boundary output channel (CH2b);
or
wherein the first sensor controller (TIC1) is configured to vary the first compensation voltage (C-Vdrv1) and the second compensation voltage (C-Vref1) when the first boundary-sensing electrode (SE1b) is connected to a first boundary output channel (CH1b) among the first output channels (I-CH1), and
wherein the second sensor controller (TIC2) is configured to vary the first compensation voltage (C-Vdrv1) and the second compensation voltage (C-Vref1) when the second boundary-sensing electrode (SE2b) is connected to a second boundary output channel (CH2b) among the second output channels (I-CH2).

13. The display device of one of the preceding claims comprising:
(PX)the compensation circuit (CCR1, CCR2) comprising:
a first compensation circuit (CCR11, CCR12, CCR21, CCR22) connected between one output channel among the first output channels (I-CH1) and the second output channels (I-CH2) and a first compensation voltage line among the compensation voltage lines (C-VL1, C-VL2, C-VL3, C-VL4) configured to receive a first compensation voltage among the compensation voltages (C-Vdrv1, C-Vref1, C-Vdrv2, C-Vref2); and
a second compensation circuit (CCR11, CCR12, CCR21, CCR22) connected between the one output channel and a second compensation voltage line among the compensation voltage lines (C-VL1, C-VL2, C-VL3, C-VL4) configured to receive a second compensation voltage among the compensation voltages (C-Vdrv1, C-Vref1, C-Vdrv2, C-Vref2); and
a printed circuit board (PCB) electrically connected to the display panel (DP) and to the input-sensing layer (ISP), and having the first sensor controller (TIC1), the second sensor controller (TIC2), and the compensation circuit (CCR1, CCR2) thereon.

14. The display device of one of the preceding claims, wherein the first compensation voltage line (C-VL1) and the second compensation voltage line (C-VL2) are respectively configured to receive the first compensation voltage (C-Vdrv1) and the second compensation voltage (C-Vref1) from one of the first sensor controller (TIC1) or the second sensor controller (TIC2).

15. An electronic device (10_E) comprising:
a display module (11); and
a processor (12) configured to control operation of the display module (11),
wherein the display module (11) comprises:
a display panel (DP) according to one of the preceding claims.
